(19) Europäisches Patentamt
European Patent Office
Office européen des brevets

(11) EP 4 468 417 A1

(12) EUROPEAN PATENT APPLICATION
published in accordance with Art. 153(4) EPC

(43) Date of publication:
**27.11.2024 Bulletin 2024/48**

(21) Application number: **23740231.8**

(22) Date of filing: **06.01.2023**

(51) International Patent Classification (IPC):
***H01M 4/62*** (2006.01) ***H01G 11/06*** (2013.01)
***H01G 11/36*** (2013.01) ***H01G 11/38*** (2013.01)
***H01M 4/13*** (2010.01) ***H01M 4/139*** (2010.01)

(52) Cooperative Patent Classification (CPC):
**H01G 11/06; H01G 11/36; H01G 11/38; H01M 4/13; H01M 4/139; H01M 4/1391; H01M 4/62;**
Y02E 60/10

(86) International application number:
**PCT/JP2023/000214**

(87) International publication number:
**WO 2023/136222 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.01.2022 JP 2022005309**

(71) Applicants:
- **DAIKIN INDUSTRIES, LTD.**
  **Osaka-shi, Osaka 530-0001 (JP)**
- **MCD Technologies S.a.r.l**
  **3364 Leudelange (LU)**

(72) Inventors:
- **ICHINOSE, Yuma**
  **Osaka-Shi, Osaka 530-0001 (JP)**
- **TERADA, Junpei**
  **Osaka-Shi, Osaka 530-0001 (JP)**
- **YAMAZAKI, Shigeaki**
  **Osaka-Shi, Osaka 530-0001 (JP)**
- **SHIMOOKA, Toshiharu**
  **Osaka-Shi, Osaka 530-0001 (JP)**
- **HOSODA, Chihiro**
  **Osaka-Shi, Osaka 530-0001 (JP)**
- **FURUTANI, Takahiro**
  **Osaka-Shi, Osaka 530-0001 (JP)**
- **PREDTECHENSKIY, Mikhail Rudolfovich**
  **Novosibirsk 630090 (RU)**
- **BOBRENOK, Oleg Filippovich**
  **Novosibirsk 630090 (RU)**

(74) Representative: **Hoffmann Eitle**
**Patent- und Rechtsanwälte PartmbB**
**Arabellastraße 30**
**81925 München (DE)**

# (54) COMPOSITION FOR ELECTROCHEMICAL DEVICE, ELECTRODE, AND SECONDARY BATTERY

(57) Provided is a composition for an electrochemical device, containing a single-walled carbon nanotube, a binder, and a solvent, wherein the binder comprises a fluorine-containing copolymer comprising a repeating unit (a) based on vinylidene fluoride, and at least one repeating unit (b) selected from the group consisting of a repeating unit (b1) and a repeating unit (b2) .

EP 4 468 417 A1

## Description

### TECHNICAL FIELD

The present disclosure relates to a composition for an electrochemical device, an electrode, and a secondary battery.

### BACKGROUND ART

Patent Document 1 discloses a slurry for an electrode mixture for a lithium secondary battery, comprising an electrode active material (A), a binder (B), and a fluoroelastomer particle (C), wherein the fluoroelastomer particle (C) is a crosslinked fluoroelastomer particle.

In addition, Patent Document 2 discloses, for example, a crosslinkable composition comprising an amorphous fluorine-containing elastomer and a crosslinking agent, wherein the amorphous fluorine-containing elastomer is a copolymer comprising vinylidene fluoride, a fluorine-containing monomer represented by the following general formula (1):

$$CH_2=CFRf \qquad (1)$$

wherein Rf is a linear or branched fluoroalkyl group having 1 to 12 carbon atoms, and an other monomer copolymerizable with vinylidene fluoride and the fluorine-containing monomer, wherein a molar ratio of a vinylidene fluoride unit/a fluorine-containing monomer unit is 85/15 to 20/80, and an other monomer unit accounts for 0 to 50 mol% of all monomer units, a glass transition temperature is 25°C or less, the amorphous fluorine-containing elastomer has at least one of an iodine atom and a bromine atom, and a total content thereof is 0.001 to 10% by weight.

### RELATED ART

### PATENT DOCUMENTS

Patent Document 1: International Publication No. WO 2011-002097
Patent Document 2: Japanese Patent Laid-Open No. 2013-216915

### SUMMARY OF THE INVENTION

### PROBLEM TO BE SOLVED BY THE INVENTION

An object of the present disclosure is to provide a composition for an electrochemical device that allows an electrode mixture having little settling of a powder material in the electrode mixture to be obtained, allows an electrode material layer having excellent flexibility to be obtained, and allows a battery having excellent cycle characteristics to be obtained.

### MEANS FOR SOLVING THE PROBLEM

According to the present disclosure, provided is a composition for an electrochemical device, containing a single-walled carbon nanotube, a binder, and a solvent, wherein the binder contains a fluorine-containing copolymer containing a repeating unit (a) based on vinylidene fluoride and at least one repeating unit (b) selected from the group consisting of a repeating unit (b1) represented by a general formula (b1) and a repeating unit (b2) represented by a general formula (b2).

General formula (b1):

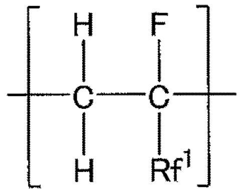

wherein $Rf^1$ is a linear or branched fluorinated alkyl group or fluorinated alkoxy group having 1 to 12 carbon atoms, and when the number of carbon atoms is 2 or more, $Rf^1$ optionally includes oxygen atom between carbon atoms.

General formula (b2):

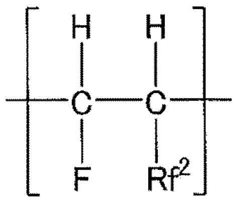

wherein $Rf^2$ is a linear or branched fluorinated alkyl group or fluorinated alkoxy group having 1 to 12 carbon atoms, and when the number of carbon atoms is 2 or more, $Rf^2$ optionally includes oxygen atom between carbon atoms.

An average outer diameter of the single-walled carbon nanotube is preferably 2.5 nm or less.

An average G/D ratio of the single-walled carbon nanotube is preferably 2 or more.

In the fluorine-containing copolymer, the molar ratio of the repeating unit (a) to the repeating unit (b), (a)/(b), is preferably 99/1 to 20/80.

The glass transition temperature of the fluorine-containing copolymer is preferably 25°C or less.

The binder preferably further contains a polyvinylidene fluoride.

The mass ratio of the fluorine-containing copolymer to the polyvinylidene fluoride, fluorine-containing copolymer/polyvinylidene fluoride, is preferably 99/1 to 1/99.

The solvent is preferably water or at least one selected from the group consisting of N,N-dimethylformamide, N,N-dimethylacetamide, N-methyl-2-pyrrolidone, and a solvent represented by a general formula (1).

General formula (1):

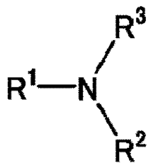

wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

The composition for an electrochemical device of the present disclosure can be used to form an electrode of an electrochemical device.

The composition for an electrochemical device of the present disclosure preferably further contains a powder electrode material, excluding the single-walled carbon nanotube.

The powder electrode material preferably contains a lithium composite oxide as a positive electrode active material.

The content of the single-walled carbon nanotube is preferably 0.001 to 10 parts by mass per 100 parts by mass of the positive electrode active material.

The content of the binder is preferably 0.01 to 5.0 parts by mass per 100 parts by mass of the positive electrode active material.

The powder electrode material preferably contains a negative electrode active material that exhibits a potential of 2.5 V or less vs. Li when alloyed with Li or bonded with Li.

The content of the single-walled carbon nanotube is preferably 0.001 to 10 parts by mass per 100 parts by mass of the negative electrode active material.

The content of the binder is preferably 0.01 to 20.0 parts by mass per 100 parts by mass of the negative electrode active material.

In addition, according to the present disclosure, provided is an electrode including a current collector and an electrode material layer provided on one side or each of both sides of the current collector and formed from the composition for an electrochemical device.

In addition, according to the present disclosure, a secondary battery including the above electrode is provided.

EFFECTS OF INVENTION

According to the present disclosure, it is possible to provide a composition for an electrochemical device that allows an electrode mixture having little settling of a powder material in the electrode mixture to be obtained, allows an electrode material layer having excellent flexibility to be obtained, and allows a battery having excellent cycle characteristics to be obtained.

In addition, by using the composition for an electrochemical device of the present disclosure to form a positive electrode, it is possible to obtain a positive electrode mixture having little settling of a powder material in the positive electrode mixture, it is possible to obtain a positive electrode material layer having excellent flexibility, and it is possible to obtain a battery that has excellent initial positive electrode discharge capacity utilization rate and cycle characteristics and is unlikely to increase in resistance even after repeated charge and discharge.

In addition, by using the composition for an electrochemical device of the present disclosure to form a negative electrode, it is possible to obtain a negative electrode mixture having little settling of a powder material in the negative electrode mixture, it is possible to obtain a negative electrode material layer having excellent flexibility, and it is possible to obtain a battery having excellent cycle characteristics.

DESCRIPTION OF EMBODIMENTS

Hereinafter, specific embodiments of the present disclosure will be described in detail, but the present disclosure is not limited to the following embodiments.

The composition for an electrochemical device of the present disclosure contains a single-walled carbon nanotube, a binder, and a solvent.

The binder is used in order to bind a powder electrode material and adhere the powder electrode material and a current collector together to create an electrode for a battery such as a secondary battery or a capacitor. The binder is usually used as a component of an electrode mixture containing a powder electrode material and water or a non-aqueous solvent. An electrode including an electrode material layer and a current collector can be created by applying the electrode mixture to the current collector. Poor flexibility of the obtained electrode material layer causes a problem such as peeling of the powder electrode material from the current collector or cracking of the electrode material layer when an electrode is bent or an electrode is wound. In addition, even if the electrode material layer does not undergo cracking, when the electrode material layer is deformed by bending or winding of an electrode, or when the electrode material layer expands and contracts, the following problem can also occur: a conductive network structure formed by the powder electrode material such as an electrode active material is destroyed to make it impossible for the electrode to exhibit the desired performance.

Patent Document 1 proposes use of a crosslinked fluoroelastomer particle in addition to a binder. However, this has the following problems: for example, when a positive electrode mixture containing a crosslinked fluoroelastomer particle such as a crosslinked VdF/HFP copolymer elastomer particle or a crosslinked TFE/VdF/HFP copolymer elastomer, and a powder electrode material such as a positive electrode active material having a high nickel content is prepared, a component in the positive electrode mixture is settled, which makes it difficult to uniformly apply the positive electrode mixture and makes the adhesion between the positive electrode material layer obtained and the current collector poor.

The binder included in the composition for an electrochemical device of the present disclosure contains a repeating unit (a) having a specific structure and a repeating unit (b) having a specific structure in an extremely limited molar ratio, and thus, by using the composition for an electrochemical device of the present disclosure, it is possible to obtain an electrode mixture having less settling of the powder material in the electrode mixture, and furthermore, and it is possible to form an electrode material layer exhibiting excellent adhesion and flexibility. Further, such a binder is used in combination with a single-walled carbon nanotube, and thus it is possible to impart excellent cycle characteristics even to a battery used in a state in which an electrode material layer is deformed by bending or winding of an electrode, or a battery in which an electrode material layer expands and contracts.

(Single-walled carbon nanotubes)

The single-walled carbon nanotubes (SWCNTs) are a special kind of carbon material, which is known as a one-dimensional material. The single-walled carbon nanotube is made of a graphene sheet and has been wound to form a hollow tube having a wall as thick as one atom. The single-walled carbon nanotube has such a chemical structure and size and thereby exhibits excellent mechanical, electrical, thermal, and chemical characteristics.

The average outer diameter of the single-walled carbon nanotubes is preferably 2.5 nm or less, more preferably 2.0 nm or less, further preferably 1.8 nm or less, and preferably 1.0 nm or more, more preferably 1.1 nm or more, and further preferably 1.2 nm or more. The average outer diameter of the single-walled carbon nanotubes can be determined from the light absorption spectrum or Raman spectrum obtained by ultraviolet-visible-near infrared spectroscopy (UV-Vis-NIR) or a transmission electron microscope (TEM) image.

The average G/D ratio measured by the Raman spectroscopy (wavelength: 532 nm) of the single-walled carbon nanotubes is preferably 2 or more, more preferably 5 or more, further preferably 10 or more, particularly preferably 30 or more, most preferably 40 or more and preferably 250 or less, more preferably 220 or less, further preferably 180 or less. The G/D ratio refers to the intensity ratio (G/D) of the G band to the D band of the Raman spectrum of the single-walled carbon nanotubes. The higher the average G/D ratio of the single-walled carbon nanotubes is, the higher the crystallinity of the single-walled carbon nanotubes is and the smaller the number of carbon nanotubes having impurity carbon or defects is.

The average length of the single-walled carbon nanotubes is preferably 0.1 to 50 μm, more preferably 0.5 to 20 μm, and further preferably 1 to 10 μm. The average length of the single-walled carbon nanotubes can be determined by obtaining an AFM image of the single-walled carbon nanotubes using an atomic force microscope (AFM) or obtaining a TEM image of the single-walled carbon nanotubes using a transmission electron microscope (TEM), measuring the length of each single-walled carbon nanotube, and dividing the total value of the lengths by the number of the measured single-walled carbon nanotubes.

The content of the single-walled carbon nanotube in the composition for an electrochemical device of the present disclosure is preferably 0.01 to 3% by mass, more preferably 0.01 to 2% by mass, further preferably 0.01 to 1% by mass, particularly preferably 0.1 to 0.8% by mass, and most preferably 0.2 to 0.5% by mass, based on the mass of the composition. When the content of the single-walled carbon nanotube is within the above range, the composition has an appropriate viscosity, and an electrode mixture in which each component has been sufficiently dispersed can be prepared without imparting an excessive shear force. Therefore, it is possible to sufficiently form a three-dimensional network of the single-walled carbon nanotubes in the obtained electrode material layer.

(Binder)

The composition for an electrochemical device of the present disclosure contains a binder. The binder used in the present disclosure contains a fluorine-containing copolymer containing a repeating unit (a) based on vinylidene fluoride and at least one repeating unit (b) selected from the group consisting of a repeating unit (b1) represented by a general formula (b1) and a repeating unit (b2) represented by a general formula (b2).

The repeating unit (b1) is a repeating unit represented by a general formula (b1).

General formula (b1):

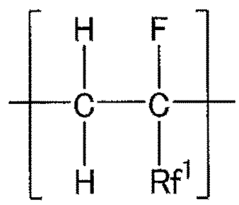

In the general formula (b1), $Rf^1$ is a linear or branched fluorinated alkyl group having 1 to 12 carbon atoms, or a linear or branched fluorinated alkoxy group having 1 to 12 carbon atoms. The fluorinated alkyl group and the fluorinated alkoxy group can each include an oxygen atom (-O-) between carbon atoms thereof when the number of carbon atoms is 2 or more.

The fluorinated alkyl group for $Rf^1$ may be a partially fluorinated alkyl group in which a part of the hydrogen atoms bonded to the carbon atoms is replaced with a fluorine atom in some embodiments, and may be a perfluorinated alkyl group in which all of the hydrogen atoms bonded to the carbon atoms are replaced with fluorine atoms in other embodiments. In addition, the fluorinated alkyl group for $Rf^1$ may have a hydrogen atom replaced with a substituent other than a fluorine

atom, and preferably does not include a substituent other than a fluorine atom.

The fluorinated alkoxy group for $Rf^1$ may be a partially fluorinated alkoxy group in which a part of the hydrogen atoms bonded to the carbon atoms is replaced with a fluorine atom in some embodiments, and may be a perfluorinated alkoxy group in which all of the hydrogen atoms bonded to the carbon atoms are replaced with fluorine atoms in other embodiments. In addition, the fluorinated alkoxy group for $Rf^1$ may have a hydrogen atom replaced with a substituent other than a fluorine atom, and preferably does not include a substituent other than a fluorine atom.

The number of carbon atoms of $Rf^1$ is preferably 1 to 10, more preferably 1 to 6, further preferably 1 to 4, and particularly preferably 1.

$Rf^1$ is preferably a group represented by the general formula:

$$-(Rf^{11})_m-(O)_p-(Rf^{12}-O)_n-Rf^{13}$$

wherein $Rf^{11}$ and $Rf^{12}$ are each independently a linear or branched fluorinated alkylene group having 1 to 4 carbon atoms, $Rf^{13}$ is a linear or branched fluorinated alkyl group having 1 to 4 carbon atoms, p is 0 or 1, m is an integer of 0 to 4, and n is an integer of 0 to 4.

The fluorinated alkylene group for $Rf^{11}$ and $Rf^{12}$ may be a partially fluorinated alkylene group in which a part of the hydrogen atoms bonded to the carbon atoms is replaced with a fluorine atom in some embodiments, and may be a perfluorinated alkylene group in which all of the hydrogen atoms bonded to the carbon atoms are replaced with fluorine atoms in other embodiments. In addition, the fluorinated alkylene group for $Rf^{11}$ and $Rf^{12}$ may have a hydrogen atom replaced with a substituent other than a fluorine atom, and preferably does not include a substituent other than a fluorine atom. $Rf^{11}$ and $Rf^{12}$ may each, at each occurrence, be the same or different.

Examples of the fluorinated alkylene group for $Rf^{11}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 2 carbon atoms is preferable, and $-CF_2-$ is more preferable.

Examples of the fluorinated alkylene group for $Rf^{12}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 to 3 carbon atoms is preferable, and $-CF_2-$, $-CF_2CF_2-$, $-CF_2-CF_2-CF_2-$, $-CF(CF_3)-CF_2-$, or $-CF_2-CF(CF_3)-$ is more preferable.

The fluorinated alkyl group for $Rf^{13}$ may be a partially fluorinated alkyl group in which a part of the hydrogen atoms bonded to the carbon atoms is replaced with a fluorine atom in some embodiments, and may be a perfluorinated alkyl group in which all of the hydrogen atoms bonded to the carbon atoms are replaced with fluorine atoms in other embodiments. In addition, the fluorinated alkyl group for $Rf^{13}$ may have a hydrogen atom replaced with a substituent other than a fluorine atom, and preferably does not include a substituent other than a fluorine atom, for example, a reactive functional group such as -CN, -I, or -Br.

Examples of the fluorinated alkyl group for $Rf^{13}$ include $-CH_2F$, $-CHF_2$, $-CF_3$, $-CH_2-CH_2F$, $-CH_2-CHF_2$, $-CH_2-CF_3$, $-CHF-CH_2F$, $-CHF-CHF_2$, $-CHF-CF_3$, $-CF_2-CH_2F$, $-CF_2-CHF_2$, $-CF_2-CF_3$, $-CH_2-CF_2-CH_2F$, $-CHF-CF_2-CH_2F$, $-CF_2-CF_2-CH_2F$, $-CF(CF_3)-CH_2F$, $-CH_2-CF_2-CHF_2$, $-CHF-CF_2-CHF_2$, $-CF_2-CF_2-CHF_2$, $-CF(CF_3)-CHF_2$, $-CH_2-CF_2-CF_3$, $-CHF-CF_2-CF_3$, $-CF_2-CF_2-CF_3$, $-CF(CF_3)-CF_3$, $-CH_2-CF_2-CF_2-CF_3$, $-CHF-CF_2-CF_2-CF_3$, $-CF_2-CF_2-CF_2-CF_3$, $-CH(CF_3)-CF_2-CF_3$, $-CF(CF_3)-CF_2-CF_3$, and $-C(CF_3)_2-CF_3$, and among these, $-CF_3$, $-CHF-CF_3$, $-CF_2-CHF_2$, $-CF_2-CF_3$, $-CF_2-CF_2-CF_3$, $-CF(CF_3)-CF_3$, $-CF_2-CF_2-CF_2-CF_3$, $-CH(CF_3)-CF_2-CF_3$, or $-CF(CF_3)-CF_2-CF_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit (b1) is preferably

$-CH_2-CF[-CF_3]-$,

$-CH_2-CF[-CF_2CF_3]-$,

$-CH_2-CF[-CF_2CF_2CF_3]-$,

$-CH_2-CF[-CF_2CF_2CF_2CF_3]-$,

$-CH_2-CF[-CF_2-O-CF(CF_3)-CF_2-O-CHF-CF_3]-$,

$-CH_2-CF[-CF_2-O-CF(CF_3)-CF_2-O-CF_2-CF_3]-$,

$-CH_2-CF[-CF_2-O-CF(CF_3)-CF_2-O-CF(CF_3)-CF_3]-$,

$-CH_2-CF[-CF_2-O-CF(CF_3)-CF_2-O-CH (CF_3)-CF_2-CF_3]-$,

$-CH_2-CF[-CF_2-O-CF(CF_3)-CF_2-O-CF(CF_3)-CF_2-CF_3]-$,

$-CH_2-CF[-OCF_2OCF_3]-$,

$-CH_2-CF[-OCF_2CF_2CF_2OCF_3]-$,

$-CH_2-CF[-CF_2OCF_2OCF_3]-$,

$-CH_2-CF[-CF_2OCF_2CF_2CF_2OCF_3]-$, or

$-CH_2-CF[-O-CF_2-CF_3]-$, and

more preferably

$-CH_2-CF[-CF_3]-$

or

$-CH_2-CF[-CF_2-O-CF(CF_3)-CF_2-O-CHF-CF_3]-$.

The repeating unit (b2) is a repeating unit represented by a general formula (b2).

General formula (b2):

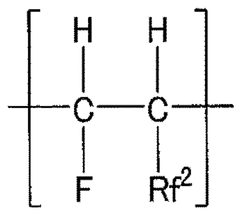

In the general formula (b2), $Rf^2$ is a linear or branched fluorinated alkyl group having 1 to 12 carbon atoms, or a linear or branched fluorinated alkoxy group having 1 to 12 carbon atoms. The fluorinated alkyl group and the fluorinated alkoxy group can each include an oxygen atom (-O-) between carbon atoms thereof when the number of carbon atoms is 2 or more.

The fluorinated alkyl group for $Rf^2$ may be a partially fluorinated alkyl group in which a part of the hydrogen atoms bonded to the carbon atoms is replaced with a fluorine atom in some embodiments, and may be a perfluorinated alkyl group in which all of the hydrogen atoms bonded to the carbon atoms are replaced with fluorine atoms in other embodiments. In addition, the fluorinated alkyl group for $Rf^2$ may have a hydrogen atom replaced with a substituent other than a fluorine atom, and preferably does not include a substituent other than a fluorine atom.

The fluorinated alkoxy group for $Rf^2$ may be a partially fluorinated alkoxy group in which a part of the hydrogen atoms bonded to the carbon atoms is replaced with a fluorine atom in some embodiments, and may be a perfluorinated alkoxy group in which all of the hydrogen atoms bonded to the carbon atoms are replaced with fluorine atoms in other embodiments. In addition, the fluorinated alkoxy group for $Rf^2$ may have a hydrogen atom replaced with a substituent other than a fluorine atom, and preferably does not include a substituent other than a fluorine atom.

The number of carbon atoms of $Rf^2$ is preferably 1 to 10, more preferably 1 to 6, further preferably 1 to 4, and particularly preferably 1.

$Rf^2$ is preferably a group represented by the general formula:

$-(Rf^{21})_m-(O)_p-(Rf^{22}-O)_n-Rf^{23}$

wherein $Rf^{21}$ and $Rf^{22}$ are each independently a linear or branched fluorinated alkylene group having 1 to 4 carbon atoms, $Rf^{23}$ is a linear or branched fluorinated alkyl group having 1 to 4 carbon atoms, p is 0 or 1, m is an integer of 0 to 4, and n is an integer of 0 to 4.

The fluorinated alkylene group for $Rf^{21}$ and $Rf^{22}$ may be a partially fluorinated alkylene group in which a part of the hydrogen atoms bonded to the carbon atoms is replaced with a fluorine atom in some embodiments, and may be a perfluorinated alkylene group in which all of the hydrogen atoms bonded to the carbon atoms are replaced with fluorine atoms in other embodiments. In addition, the fluorinated alkylene group for $Rf^{21}$ and $Rf^{22}$ may have a hydrogen atom replaced with a substituent other than a fluorine atom, and preferably does not include a substituent other than a fluorine atom. $Rf^{21}$ and $Rf^{22}$ may each, at each occurrence, be the same or different.

Examples of the fluorinated alkylene group for $Rf^{21}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 2 carbon atoms is preferable, and $-CF_2-$ is more preferable.

Examples of the fluorinated alkylene group for $Rf^{22}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH (CF_3)-CF_2-CF_2-$, $-CF(CF_3)-CF_2-CF_2-$, and $-C(CF_3)_2-CF_2-$, and among these, a perfluorinated alkylene group having 1 to 3 carbon atoms is preferable, and $-CF_2-$, $-CF_2CF_2-$, $-CF_2-CF_2-CF_2-$, $- CF(CF_3)-CF_2-$, or $-CF_2-CF(CF_3)-$ is more preferable.

The fluorinated alkyl group for $Rf^{23}$ may be a partially fluorinated alkyl group in which a part of the hydrogen atoms bonded to the carbon atoms is replaced with a fluorine atom in some embodiments, and may be a perfluorinated alkyl group in which all of the hydrogen atoms bonded to the carbon atoms are replaced with fluorine atoms in other embodiments. In addition, the fluorinated alkyl group for $Rf^{23}$ may have a hydrogen atom replaced with a substituent other than a fluorine atom, and preferably does not include a substituent other than a fluorine atom, for example, a reactive functional group such as -CN, -I, or -Br.

Examples of the fluorinated alkyl group for $Rf^{23}$ include $-CH_2F$, $-CHF_2$, $-CF_3$, $-CH_2-CH_2F$, $-CH_2-CHF_2$, $-CH_2-CF_3$, $-CHF-CH_2F$, $-CHF-CHF_2$, $-CHF-CF_3$, $-CF_2-CH_2F$, $-CF_2-CHF_2$, $-CF_2-CF_3$, $-CH_2-CF_2-CH_2F$, $-CHF-CF_2-CH_2F$, $-CF_2-CF_2-CH_2F$, $-CF (CF_3)-CH_2F$, $-CH_2-CF_2-CHF_2$, $-CHF-CF_2-CHF_2$, $-CF_2-CF_2-CHF_2$, $-CF (CF_3)-CHF_2$, $-CH_2-CF_2-CF_3$, $-CHF-CF_2-CF_3$, $-CF_2-CF_2-CF_3$, $-CF(CF_3)-CF_3$, $-CH_2-CF_2-CF_2-CF_3$, $-CHF-CF_2-CF_2-CF_3$, $-CF_2-CF_2-CF_2-CF_3$, $-CH (CF_3)-CF_2-CF_3$, $-CF(CF_3)-CF_2-CF_3$, and $- C(CF_3)_2-CF_3$, and among these, $-CF_3$, $-CHF-CF_3$, $-CF_2-CHF_2$, $-CF_2-CF_3$, $-CF_2-CF_2-CF_3$, $-CF(CF_3)-CF_3$, $-CF_2-CF_2-CF_2-CF_3$, $-CH(CF_3)-CF_2-CF_3$, or $- CF(CF_3)-CF_2-CF_3$ is preferable.

p is preferably 0.
m is preferably an integer of 0 to 2, more preferably 0 or 1, and further preferably 0. In addition, when p is 0, m is preferably also 0.
n is preferably an integer of 0 to 2, more preferably 0 or 1, and further preferably 0.

The repeating unit (b2) is preferably

$-CHF-CH[-CF_3]-$,

$-CHF-CH[-CF_2CF_3]-$,

$-CHF-CH[-CF_2CF_2CF_3]-$, or

$-CHF-CH[-CF_2CF_2CF_2CF_3]-$, and

more preferably

$-CHF-CH[-CF_3]-$.

The fluorine-containing copolymer may further contain a repeating unit based on an other monomer other than the repeating units (a) and (b). The other monomer is not limited as long as it is a monomer copolymerizable with the monomers forming the repeating units (a) and (b), and one or two or more monomers may be used.

The other monomer is preferably at least one selected from the group consisting of tetrafluoroethylene [TFE], hexafluoropropylene [HFP], perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, propylene, alkyl vinyl ether, and a monomer having a reactive functional group, more preferably at least one selected from the group consisting of TFE, hexafluoropropylene, perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, alkyl vinyl ether, and a monomer having a reactive functional group, and further preferably TFE. In addition, it is also one of the preferable embodiments to use only TFE as the other monomer.

Examples of the reactive functional group include a cyano group, a carboxyl group, an alkoxycarbonyl group, I, Br, - $CH_2OH$, and a carbon-carbon double bond.

Examples of the monomer having a reactive functional group include

an iodine or bromine-containing monomer represented by general formula (2) : $CX^3_2=CX^3\text{-}Rf^3CHR^1X^4$ wherein $X^3$ is the same or different and is H, F, or $-CH_3$, $Rf^3$ is a fluoroalkylene group, a perfluoroalkylene group, a fluoro(poly) oxyalkylene group, or a perfluoro(poly)oxyalkylene group, $R^1$ is H or $-CH_3$, and $X^4$ is I or Br;

an iodine or bromine-containing monomer represented by general formula (3) : $CX^5_2=CX^5\text{-}Rf^4X^6$ wherein $X^5$ is the same or different and is H, F, or $-CH_3$, $Rf^4$ is a fluoroalkylene group, a perfluoroalkylene group, a fluoro(poly)oxyalkylene group, or a perfluoro(poly)oxyalkylene group, and $X^6$ is I or Br (preferably, an iodine-containing monomer represented by the general formula: $CH_2=CH(CF_2)_nI$ wherein n is an integer of 2 to 8);

a monomer represented by general formula (4): $CF_2=CFO(CF_2CF(CF_3)O)_m(CF_2)_n\text{-}X^7$ wherein m is an integer of 0 to 5, n is an integer of 1 to 3, and $X^7$ is a cyano group, a carboxyl group, an alkoxycarbonyl group, I, or Br;

a monomer represented by general formula (5): $CH_2=CFCF_2O(CF(CF_3)CF_2O)_m(CF(CF_3))_n\text{-}X^8$ wherein m is an integer of 0 to 5, n is an integer of 1 to 3, and $X^8$ is a cyano group, a carboxyl group, an alkoxycarbonyl group, I, Br, or $-CH_2OH$; and

a monomer represented by general formula (6) : $CR^2R^3=CR^4\text{-}Z\text{-}CR^5=CR^6R^7$ wherein $R^2$ to $R^7$ are the same or different and are each H or an alkyl group having 1 to 5 carbon atoms, and Z is a alkylene group having 1 to 18 carbon atoms, a cycloalkylene group having 3 to 18 carbon atoms, an alkylene or oxyalkylene group having 1 to 10 carbon atoms at least partially fluorinated, each of which is linear or branched and may have an oxygen atom, or a (per) fluoropolyoxyalkylene group represented by $-(Q)_p\text{-}CF_2O\text{-}(CF_2CF_2O)_m(CF_2O)_n\text{-}CF_2\text{-}(Q)_p\text{-}$wherein Q is an alkylene or oxyalkylene group, p is 0 or 1, and m/n is 0.2 to 5, and having a molecular weight of 500 to 10,000.

Examples of the monomer represented by the general formula (6) include $CH_2=CH\text{-}(CF_2)_2\text{-}CH=CH_2$, $CH_2=CH\text{-}(CF_2)_4\text{-}CH=CH_2$, $CH_2=CH\text{-}(CF_2)_6\text{-}CH=CH_2$, and a monomer represented by the general formula: $CH_2=CH\text{-}Z^1\text{-}CH=CH_2$ wherein $Z^1$ is a fluoropolyoxyalkylene group represented by $-CH_2OCH_2\text{-}CF_2O\text{-}(CF_2CF_2O)_{m1}(CF_2O)_{n1}\text{-}CF_2\text{-}CH_2OCH_2\text{-}$, m1/n1 is 0.5, and the molecular weight is 2,000.

The monomer having a reactive functional group is, among these, preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF_2CH_2I$, $CF_2=CFOCF_2CF(CF_3)OCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, and $CH_2=CFCF_2OCF(CF_3)CF_2OCF(CF_3)CH_2OH$.

The fluorine-containing copolymer may contain a repeating unit based on a monomer having a reactive functional group. In this case, a crosslinked structure can be formed by reacting reactive functional groups with each other or by reacting a reactive functional group with a crosslinking agent. However, in one embodiment of the composition for an electrochemical device of the present disclosure, the fluorine-containing copolymer does not contain a repeating unit based on a monomer having a reactive functional group. In one embodiment of the composition for an electrochemical device of the present disclosure, no crosslinking agent is contained.

The content of the repeating unit based on an other monomer is preferably 0 to 50 mol% and more preferably 0 to 40 mol%, based on all repeating units constituting the fluorine-containing copolymer. In some embodiments, the content of the repeating unit based on an other monomer may be 0 mol%.

The molar ratio of the repeating unit (a) to the repeating unit (b), (a)/(b), in the fluorine-containing copolymer is 99/1 to 20/80, preferably 95/5 or less, more preferably 87/13 or less, further preferably 78/22 or less, and preferably 22/78 or more, further preferably 50/50 or more, particularly preferably 60/40 or more, from the viewpoint of being able to obtain an electrode mixture having less settling of the powder material in the electrode mixture, being able to obtain an electrode material layer having superior flexibility, and being able to obtain a battery having superior cycle characteristics.

In the present disclosure, the content of each repeating unit is a value measured by an NMR method.

The fluorine-containing copolymer is preferably a copolymer consisting only of the repeating units (a) and (b) from the viewpoint of being able to obtain an electrode mixture having less settling of the powder material in the electrode mixture, being able to obtain an electrode material layer having superior flexibility, and being able to obtain a battery having superior cycle characteristics.

In addition, the fluorine-containing copolymer is preferably a copolymer having neither an iodine atom nor a bromine atom from the viewpoint of far superior battery characteristics.

The glass transition temperature of the fluorine-containing copolymer is preferably 25°C or less, more preferably 0°C or less, further preferably -5°C or less, and particularly preferably -10°C or less. Further, the glass transition temperature of the fluorine-containing copolymer can also be - 20°C or less. When the glass transition temperature of the fluorine-containing copolymer is within the above range, an electrode material layer having far superior flexibility can be formed. The fluorine-containing copolymer is preferably a fluorine-containing elastomer and preferably an amorphous polymer, from the viewpoint of being able to form an electrode material layer having far superior flexibility.

In the present disclosure, "amorphous" means that the magnitude of a melting peak ($\Delta H$) that appears in a DSC measurement (temperature-increasing rate of 20°C/min) is 2.0 J/g or less.

The glass transition temperature is determined by using a differential scanning calorimeter (DSC822e manufactured by Mettler Toledo, or X-DSC7000 manufactured by Hitachi High-Tech Science Corporation) to cool 10 mg of a sample to -75°C and then raise the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The fluorine-containing copolymer may or may not have a melting point. When the fluorine-containing copolymer has a melting point, the melting point of the fluorine-containing copolymer is preferably 100 to 170°C. The melting point is determined as the temperature corresponding to the maximum value in the heat of fusion curve when the temperature is raised from 30°C to 220°C at a rate of 10°C/min, then lowered to 30°C at 10°C/min, and raised again to 220°C at a rate of 10°C/min by using a differential scanning calorimetry (DSC) apparatus.

The number average molecular weight (Mn) of the fluorine-containing copolymer is preferably 7,000 to 500,000, the weight average molecular weight (Mw) of the fluorine-containing copolymer is preferably 10,000 to 3,000,000, and Mw/Mn of the fluorine-containing copolymer is preferably 1.3 to 4.0. The number average molecular weight (Mn), the weight average molecular weight (Mw), and Mw/Mn are values measured by a GPC method.

The Mooney viscosity of the fluorine-containing copolymer at 121°C, ML1 + 10 (121°C), is preferably 2 or more, more preferably 5 or more, further preferably 10 or more, and particularly preferably 30 or more, and in some embodiments, may be 200 or less.

The Mooney viscosity of the fluorine-containing copolymer at 140°C, ML1 + 10 (121°C), is preferably 2 or more, more preferably 5 or more, further preferably 10 or more, and particularly preferably 30 or more, and in some embodiments, may be 200 or less.

The Mooney viscosity is a value measured according to ASTM-D1646-15 and JIS K6300-1:2013.

For the fluorine-containing copolymer, the terminal structure preferably satisfies the following inequality:

$$0.01 \leq ([-CH_2OH] + [-COOH])/([-CH_3] + [-CF_2H] + [-CH_2OH] + [-CH_2I] + [-OC(O)R_H] + [-COOH]) \leq 0.25$$

wherein $R_H$ is an alkyl group having 1 to 20 carbon atoms. When the terminal functional group satisfies the above expression, good adhesion and flexibility are provided, and the binder has an excellent function.

Satisfying the above general formula does not mean that the fluorine-containing copolymer has all the functional groups of $[-CH_3]$, $[-CF_2H]$, $[-CH_2OH]$ , $[-CH_2I]$, $[-OC(O)R_H]$, and [-COOH], but means that the ratio of the numbers of the terminal groups present in the fluorine-containing copolymer among these functional groups is within the above range.

The abundance of each terminal group of the fluorine-containing copolymer can be measured by analysis by NMR.

For example, NMR terminal group analysis is carried out by a proton solution NMR method. An analytical sample is adjusted to be a 20% by mass solution using Acetone-d6 as a solvent, and the measurement is carried out.

The reference peak is the peak top of acetone at 2.05 ppm.

Measuring apparatus: VNMRS400 manufactured by Varian, Inc.
Resonance frequency: 399.74 (Sfrq)
Pulse width: 45°

The terminals are associated with the following respective peak positions.

$[-CH_3]$ : 1.72 to 1.86 ppm
$[-CF_2H]$ : 6.1 to 6.8 ppm
$[-CH_2OH]$: 3.74 to 3.80 ppm
$[-CH_2I]$: 3.87 to 3.92 ppm
$[-OC(O)R_H]$: 1.09 to 1.16 ppm
[-COOH]: 10 to 15 ppm

The amount of each of the functional groups is calculated from the peak intensity based on the integrated value of the peak specified by the measurement described above, and based on the results thereof, the ratio of the numbers of the functional groups is calculated by the following expression.

$$([-CH_2OH] + [-COOH])/([-CH_3] + [-CF_2H] + [-CH_2OH] + [-CH_2I] + [-OC(O)R_H] + [-COOH])$$

The method for setting [-$CH_2$OH] and [-COOH] within the above predetermined range is not limited, and the setting can be controlled by a known method (for example, selection or amount of an initiator used for polymerization).

The above fluorine-containing copolymer can be produced by polymerizing the monomers forming the repeating units (a) and (b) and the like by a known method.

In addition, the above fluorine-containing copolymer can also be produced by a production method for producing a fluorine-containing copolymer containing a vinylidene fluoride unit and a repeating unit (b) by polymerizing monomers forming repeating units (a) and (b) in a reactor, wherein the content of the repeating unit (b) in the fluorine-containing copolymer is 3.0 to 25.0% by mass based on all monomer units, and before or at the start of polymerization, 90% by weight or more of the monomer forming the repeating unit (b) based on the total amount of the monomer forming the repeating unit (b) is added to the reactor to carry out polymerization at a polymerization temperature of 0 to 55°C. According to this production method, a fluorine-containing copolymer having a relatively high melting point (for example, a fluorine-containing copolymer having a melting point of 160°C or more) can be produced.

The composition for an electrochemical device of the present disclosure may contain an other polymer other than the above fluorine-containing copolymer. Examples of the other polymer include a fluoropolymer excluding the above fluorine-containing copolymer, polymethacrylate, polymethyl methacrylate, polyacrylonitrile, polyimide, polyamide, polyamideimide, polycarbonate, styrene elastomer, butadiene elastomer, styrenebutadiene elastomer, and polyacrylic acid.

The other polymer is, among these, preferably a fluoropolymer excluding the above fluorine-containing copolymer, more preferably at least one selected from the group consisting of a polyvinylidene fluoride excluding the above fluorine-containing copolymer and a vinylidene fluoride polymer excluding the above fluorine-containing copolymer, and further preferably a polyvinylidene fluoride excluding the above fluorine-containing copolymer.

The composition for an electrochemical device of the present disclosure preferably also further contains a polyvinylidene fluoride excluding the above fluorine-containing copolymer from the viewpoint of being able to obtain an electrode mixture having less settling of the powder material in the electrode mixture, being able to obtain an electrode material layer having superior flexibility, and being able to obtain a battery having superior cycle characteristics.

The polyvinylidene fluoride (PVdF) is a polymer containing a repeating unit based on vinylidene fluoride (VdF) (hereinafter, referred to as a VdF unit), and is a polymer different from the above fluorine-containing copolymer. The PVdF may be a VdF homopolymer consisting only of a VdF unit in some embodiments, and may be a polymer containing a VdF unit and a repeating unit based on a monomer copolymerizable with VdF (hereinafter, referred to as a monomer unit copolymerizable with VdF) in other embodiments.

In the PVdF, examples of the monomer copolymerizable with VdF include a fluorinated monomer and a non-fluorinated monomer, and a fluorinated monomer is preferable. The fluorinated monomer is preferably a monomer other than the monomer forming the repeating unit (b), and examples thereof include vinyl fluoride, trifluoroethylene, chlorotrifluoroethylene (CTFE), fluoroalkyl vinyl ether, hexafluoropropylene (HFP), and (perfluoroalkyl)ethylene. Examples of the non-fluorinated monomer include ethylene and propylene.

In the PVdF, the monomer copolymerizable with VdF is preferably at least one fluorinated monomer selected from the group consisting of CTFE, fluoroalkyl vinyl ether, and HFP, and more preferably at least one fluorinated monomer selected from the group consisting of CTFE, HFP, and fluoroalkyl vinyl ether.

In the PVdF, the content of the monomer unit copolymerizable with VdF is preferably 0 to 5.0 mol% and more preferably 0 to 3.0 mol% based on all repeating units (all monomer units). In the PVdF, the content of the repeating unit based on a fluorinated monomer excluding the VdF unit (hereinafter, referred to as the fluorinated monomer unit) is preferably less than 5.0 mol%, more preferably less than 3.0 mol%, and further preferably less than 1.0 mol%, based on all monomer units.

In the present disclosure, the formulation of a PVdF can be measured, for example, by $^{19}$F-NMR measurement.

The PVdF may have a polar group. By using a fluorine-containing copolymer and a PVdF having a polar group as the binder, an electrode material layer having far superior adhesion to a metal foil can be formed.

The polar group is not limited as long as it is a functional group having polarity, and is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional

group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group, and more preferably a group represented by the general formula: -COOR. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. When the group represented by the general formula: -COOR is -COOH or includes -COOH, in some embodiments, -COOH is a carboxylate such as a metal carboxylate or ammonium carboxylate.

In addition, in some embodiments, the carbonyl group-containing group may be a group represented by the general formula: -X-COOR wherein X is an atomic group having a main chain composed of 2 to 15 atoms and having a molecular weight of preferably 350 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

The polar group can be introduced into a PVdF by polymerizing VdF and a monomer having the polar group (hereinafter, referred to as a polar group-containing monomer), or can be introduced into a PVdF by reacting the PVdF with a compound having the polar group, and it is preferable to polymerize VdF and the polar group-containing monomer from the viewpoint of productivity.

By polymerizing VdF and the polar group-containing monomer, a PVdF containing a VdF unit and a repeating unit based on the polar group-containing monomer (hereinafter, referred to as a polar group-containing monomer unit) is obtained. That is, the PVdF preferably contains the polar group-containing monomer unit. The content of the polar group-containing monomer unit is preferably 0.001 to 5.0 mol%, more preferably 0.01 to 3.0 mol%, and further preferably 0.10 to 1.5 mol%, based on all monomer units.

In the present disclosure, the content of the polar group-containing monomer unit in the PVdF, for example wherein the polar group is an acid group such as a carboxylic acid, can be measured by acid-base titration of the acid group.

Examples of the polar group-containing monomer include a hydroxyalkyl (meth)acrylate such as hydroxyethyl acrylate or 2-hydroxypropyl acrylate; an unsaturated monobasic acid such as (meth)acrylic acid, crotonic acid, vinylacetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

When a PVdF is reacted with a compound having the polar group to introduce the polar group into the PVdF, the compound having the polar group may be the polar group-containing monomer, or a silane-based coupling agent or a titanate-based coupling agent having a group that is reactive with the PVdF and a hydrolyzable group. The hydrolyzable group is preferably an alkoxy group. When a coupling agent is used, the coupling agent can be reacted with a PVdF dissolved or swollen in a solvent to add the polar group to the PVdF.

The PVdF may also be obtained by partially dehydrofluorinating a PVdF using a base and then further reacting the partially dehydrofluorinated PVdF with an oxidizing agent. Examples of the oxidizing agent include hydrogen peroxide, a hypochlorite, palladium halide, chromium halide, an alkali metal permanganate, a peracid compound, an alkyl peroxide, and an alkyl persulfate.

The content of the VdF unit of the PVdF is preferably more than 95.0 mol%, more preferably more than 97.0 mol%, and further preferably more than 99.0 mol%, based on all monomer units from the viewpoint of being able to form an electrode material layer having far superior flexibility and adhesion to a metal foil.

In addition, the content of the VdF unit of the PVdF is preferably 95.0 to 99.999 mol%, more preferably more than 95.0 mol%, further preferably 97.0 mol% or more, particularly preferably 98.5 mol% or more, and more preferably 99.99 mol% or less, more preferably 99.90 mol% or less, based on all monomer units from the viewpoint of being able to form an electrode material layer having far superior flexibility and adhesion to a metal foil.

The weight average molecular weight, in terms of polystyrene, of the PVdF is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less. The weight

average molecular weight can be measured by gel permeation chromatography (GPC) using dimethylformamide as a solvent. In addition, the weight average molecular weight of the PVdF may be 1,000,000 or more in some embodiments, and may be 1,500,000 or more in other embodiments, from the viewpoint of being able to form an electrode material layer having quite excellent flexibility and adhesion to a metal foil.

The number average molecular weight, in terms of polystyrene, of the PVdF is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The melting point of the PVdF is preferably 100 to 240°C. The melting point can be determined as the temperature corresponding to the maximum value on the heat of fusion curve when the temperature is raised at a rate of 10°C/min by using a differential scanning calorimetry (DSC) apparatus.

The PVdF can be produced by a conventionally known method such as solution polymerization or suspension polymerization after appropriately mixing VdF, the above polar group-containing monomer, and an additive such as a polymerization initiator.

The storage elastic modulus of the PVdF at 30°C is preferably 2,000 MPa or less and more preferably 1,800 MPa or less.

The storage elastic modulus of the PVdF at 60°C is preferably 1,500 MPa or less and more preferably 1,300 MPa or less.

The storage elastic modulus of the PVdF at 30°C is preferably 1,000 MPa or more and more preferably 1,100 MPa or more.

The storage elastic modulus of the PVdF at 60°C is preferably 600 MPa or more and more preferably 700 MPa or more.

The storage elastic modulus of the PVdF can be measured by the same method as can the storage elastic modulus of the fluorine-containing copolymer described later.

In the composition for an electrochemical device of the present disclosure, the mass ratio of the fluorine-containing copolymer to the polyvinylidene fluoride, fluorine-containing copolymer/polyvinylidene fluoride, is preferably 99/1 to 1/99, more preferably 97/3 or less, further preferably 95/5 or less, and more preferably 3/97 or more, further preferably 5/90 or more, from the viewpoint of being able to obtain an electrode mixture having less settling of the powder material in the electrode mixture, being able to obtain an electrode material layer having superior flexibility, and being able to obtain a battery having superior cycle characteristics.

The composition for an electrochemical device of the present disclosure may contain a polyvinylidene fluoride excluding the above fluorine-containing copolymer from the viewpoint of being able to obtain an electrode mixture having less settling of the powder material in the electrode mixture, being able to obtain an electrode material layer having superior flexibility, and being able to obtain a battery having superior cycle characteristics. Examples of the vinylidene fluoride (VdF) polymer excluding the above fluorine-containing copolymer include a polymer containing a VdF unit and a repeating unit based on a fluorinated monomer excluding the VdF unit (hereinafter, referred to as a fluorinated monomer unit).

The fluorinated monomer excluding VdF is preferably a monomer other than the monomer forming the repeating unit (b), and examples thereof include tetrafluoroethylene (TFE), vinyl fluoride, trifluoroethylene, chlorotrifluoroethylene (CTFE), fluoroalkyl vinyl ether, hexafluoropropylene (HFP), and (perfluoroalkyl)ethylene. Among these, at least one selected from the group consisting of TFE, CTFE, and HFP is preferable, at least one selected from the group consisting of TFE and HFP is more preferable, and TFE is particularly preferable, from the viewpoint of being able to form an electrode material layer having far superior flexibility and adhesion to a metal foil.

The fluorinated monomer unit may or may not have a polar group.

The content of the VdF unit of the VdF polymer is more than 50 mol% and 99 mol% or less based on all monomer units. When the content of the VdF unit is in the above range, it is possible to form an electrode material layer having superior flexibility and adhesion to a metal foil.

The content of the VdF unit of the VdF polymer is preferably 57.0 mol% or more, more preferably 60.0 mol% or more, further preferably 63.0 mol% or more, and preferably 99.0 mol% or less, more preferably 97.0 mol% or less, further preferably 95.0 mol% or less, particularly preferably 90.0 mol% or less, and most preferably 85.0 mol% or less, based on all monomer units from the viewpoint of being able to form an electrode material layer having far superior flexibility and adhesion to a metal foil.

The content of the fluorinated monomer unit, excluding the VdF unit, of the VdF polymer may be less than 50 mol% and is not limited, and is preferably 1.0 mol% or more, more preferably 3.0 mol% or more, further preferably 5.0 mol% or more, particularly preferably 10.0 mol% or more, most preferably 15.0 mol% or more, and preferably 43.0 mol% or less, more preferably 40.0 mol% or less, further preferably 37.0 mol% or less, based on all monomer units from the viewpoint of being able to form an electrode material layer having far superior flexibility and adhesion to a metal foil.

In the present disclosure, the formulation of the VdF polymer can be measured, for example, by $^{19}$F-NMR

measurement.

The VdF polymer may further contain a repeating unit based on a non-fluorinated monomer (hereinafter, referred to as a non-fluorinated monomer unit). Examples of the non-fluorinated monomer include a non-fluorinated monomer having no polar group such as ethylene or propylene, and a non-fluorinated monomer having a polar group (hereinafter, sometimes referred to as a polar group-containing monomer).

When a non-fluorinated monomer having a polar group is used, the polar group is introduced into the VdF polymer, and this allows far superior adhesion between the positive electrode material layer and the current collector to be obtained. The polar group that the VdF polymer can have is preferably at least one selected from the group consisting of a carbonyl group-containing group, an epoxy group, a hydroxy group, a sulfonic acid group, a sulfuric acid group, a phosphoric acid group, an amino group, an amide group, and an alkoxy group, more preferably at least one selected from the group consisting of a carbonyl group-containing group, an epoxy group, and a hydroxy group, and further preferably a carbonyl group-containing group. The hydroxy group does not include a hydroxy group constituting a part of the carbonyl group-containing group. In addition, the amino group is a monovalent functional group obtained by removing hydrogen from ammonia or a primary or secondary amine.

The carbonyl group-containing group is a functional group having a carbonyl group (-C(=O)-). The carbonyl group-containing group is preferably a group represented by the general formula: -COOR wherein R represents a hydrogen atom, an alkyl group, or a hydroxyalkyl group, or a carboxylic anhydride group. The number of carbon atoms of each of the alkyl group and the hydroxyalkyl group is preferably 1 to 16, more preferably 1 to 6, and further preferably 1 to 3. Specific examples of the group represented by the general formula: -COOR include $-COOCH_2CH_2OH$, $-COOCH_2CH(CH_3)OH$, $-COOCH(CH_3)CH_2OH$, -COOH, - $COOCH_3$, and $-COOC_2H_5$. When the group represented by the general formula: -COOR is -COOH or includes -COOH, in some embodiments, -COOH may be a carboxylate such as a metal carboxylate or ammonium carboxylate.

In addition, in some embodiments, the carbonyl group-containing group may be a group represented by the general formula: -X-COOR wherein X is an atomic group having a main chain composed of 2 to 15 atoms and having a molecular weight of preferably 350 or less and R represents a hydrogen atom, an alkyl group, or a hydroxyalkyl group. The number of carbon atoms of each of the alkyl group and the hydroxyalkyl group is preferably 1 to 16, more preferably 1 to 6, and further preferably 1 to 3.

The amide group is preferably a group represented by the general formula: -CO-NRR' wherein R and R' each independently represent a hydrogen atom or a substituted or unsubstituted alkyl group, or a bond represented by the general formula: -CO-NR"- wherein R" represents a hydrogen atom, a substituted or unsubstituted alkyl group, or a substituted or unsubstituted phenyl group.

Examples of the above polar group-containing monomer include a hydroxyalkyl (meth)acrylate such as hydroxyethyl acrylate or 2-hydroxypropyl acrylate; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, acryloyloxypropyl succinate, methacryloyloxyethyl succinate, acryloyloxyethyl phthalate, or methacryloyloxyethyl phthalate; a monoester of an unsaturated dibasic acid such as monomethyl maleate, monoethyl maleate, monomethyl citraconate, or monoethyl citraconate; a monomer (1) represented by a general formula (1):

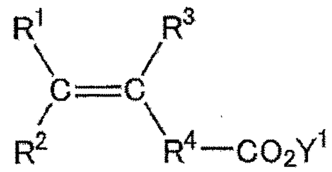

wherein $R^1$ to $R^3$ each independently represent a hydrogen atom or a hydrocarbon group having 1 to 8 carbon atoms, $R^4$ represents a single bond or a hydrocarbon group having 1 to 8 carbon atoms, and $Y^1$ represents an inorganic cation and/or an organic cation.

The polar group-containing monomer unit that the VdF polymer can contain is preferably a repeating unit based on the monomer (1) represented by the general formula (1).

In the general formula (1), $Y^1$ represents an inorganic cation and/or an organic cation. Examples of the inorganic cation include a cation such as H, Li, Na, K, Mg, Ca, Al, or Fe. Examples of the organic cation include a cation such as $NH_4$, $NH_3R^5$, $NH_2R^5{}_2$, $NHR^5{}_3$, or $NR^5{}_4$ wherein $R^5$ independently represents an alkyl group having 1 to 4 carbon atoms. $Y^1$ is preferably H, Li, Na, K, Mg, Ca, Al, or $NH_4$, more preferably H, Li, Na, K, Mg, Al, or $NH_4$, further preferably H, Li, Al, or $NH_4$, and particularly preferably H. Specific examples of the inorganic cation and the organic cation are described by omitting their signs and valences for convenience.

In the general formula (1), $R^1$ to $R^3$ each independently represent a hydrogen atom or a hydrocarbon group

having 1 to 8 carbon atoms. The hydrocarbon group is a monovalent hydrocarbon group. The hydrocarbon group preferably has 4 or less carbon atoms. Examples of the hydrocarbon group include an alkyl group, an alkenyl group, and an alkynyl group having the above number of carbon atoms, and a methyl group or an ethyl group is preferable. $R^1$ and $R^2$ are preferably each independently a hydrogen atom, a methyl group, or an ethyl group, and $R^3$ is preferably a hydrogen atom or a methyl group.

In the general formula (1), $R^4$ represents a single bond or a hydrocarbon group having 1 to 8 carbon atoms. The hydrocarbon group is a divalent hydrocarbon group. The hydrocarbon group preferably has 4 or less carbon atoms. Examples of the hydrocarbon group include an alkylene group and an alkenylene group having the above number of carbon atoms, and among these, at least one selected from the group consisting of a methylene group, an ethylene group, an ethylidene group, a propylidene group, and an isopropylidene group is preferable, and a methylene group is more preferable.

The monomer (1) is preferably at least one selected from the group consisting of (meth)acrylic acid and a salt thereof, vinylacetic acid (3-butenoic acid) and a salt thereof, 3-pentenoic acid and a salt thereof, 4-pentenoic acid and a salt thereof, 3-hexenoic acid and a salt thereof, 4-heptenoic acid and a salt thereof, and 5-hexenoic acid and a salt thereof, and more preferably at least one selected from the group consisting of 3-butenoic acid and a salt thereof and 4-pentenoic acid and a salt thereof.

The content of the polar group-containing monomer unit of the VdF polymer is preferably 0.05 to 2.0 mol%, more preferably 0.10 mol% or more, further preferably 0.25 mol% or more, particularly preferably 0.40 mol% or more, and more preferably 1.5 mol% or less, based on all monomer units.

In the present disclosure, the content of the polar group-containing monomer unit in the VdF polymer, for example where the polar group is an acid group such as a carboxylic acid, can be measured by acid-base titration of the acid group.

Examples of the VdF polymer include a VdF/TFE copolymer, a VdF/HFP copolymer, a VdF/TFE/HFP copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butenoic acid copolymer, a VdF/TFE/HFP/(meth)acrylic acid copolymer, a VdF/TFE/HFP/4-pentenoic acid copolymer, a VdF/TFE/HFP/3-butenoic acid copolymer, a VdF/TFE/2-carboxyethyl acrylate copolymer, a VdF/TFE/HFP/2-carboxyethyl acrylate copolymer, a VdF/TFE/acryloyloxyethyl succinate copolymer, and a VdF/TFE/HFP/acryloyloxyethyl succinate copolymer.

The VdF polymer is, among these, preferably a VdF polymer consisting only of a VdF unit, a TFE unit, and any non-fluorinated monomer unit from the viewpoint of being able to form an electrode material layer having far superior flexibility and adhesion to a metal foil.

When the VdF polymer contains a VdF unit and a TFE unit, the molar ratio of the VdF unit to the TFE unit, VdF unit/TFE unit, is preferably more than 50/50 and 99/1 or less, more preferably 57/43 to 97/3, further preferably 60/40 to 95/5, particularly preferably 63/37 to 90/10, and most preferably 63/37 to 85/15.

The weight average molecular weight, in terms of polystyrene, of the VdF polymer is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less. The weight average molecular weight can be measured by gel permeation chromatography (GPC) using dimethylformamide as a solvent.

The number average molecular weight, in terms of polystyrene, of the VdF polymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The melting point of the VdF polymer is preferably 100 to 170°C, more preferably 110 to 165°C, and further preferably 120 to 163°C. The melting point is determined as the temperature corresponding to the maximum value in the heat of fusion curve when the temperature is raised from 30°C to 220°C at a rate of 10°C/min, then lowered to 30°C at 10°C/min, and raised again to 220°C at a rate of 10°C/min by using a differential scanning calorimetry (DSC) apparatus.

The elongation at break of the VdF polymer is preferably 100% or more. The elongation at break is more preferably 200% or more and further preferably 300% or more.

The elongation at break can be measured by the following method. That is, the VdF polymer is dissolved in N-methyl-2-pyrrolidone (NMP) in such a way as to have a concentration of 10 to 20% by mass to obtain a VdF polymer solution, the VdF polymer solution is cast onto a glass plate and dried at 100°C for 12 hours and further dried under vacuum at 100°C for 12 hours to obtain a film having a thickness of 50 to 100 $\mu$m. The film is punched into a dumbbell shape, and the elongation at break at 25°C is measured by using an autograph.

Preferably, the storage elastic modulus of the VdF polymer at 30°C is 1,100 MPa or less, and the storage elastic modulus thereof at 60°C is 500 MPa or less.

The storage elastic modulus of the VdF polymer at 30°C is more preferably 800 MPa or less and further preferably 600 MPa or less.

The storage elastic modulus of the VdF polymer at 60°C is more preferably 350 MPa or less.

The storage elastic modulus of the VdF polymer at 30°C is preferably 100 MPa or more, more preferably 150 MPa or more, and further preferably 200 MPa or more.

The storage elastic modulus of the VdF polymer at 60°C is preferably 50 MPa or more, more preferably 80 MPa or more, and further preferably 130 MPa or more.

The storage elastic modulus is measured values at 30°C and 60°C when a sample having a length of 30 mm, a width of 5 mm, and a thickness of 50 to 100 μm is measured under conditions of tensile mode, a grip width of 20 mm, a measurement temperature of -30°C to 160°C, a temperature-increasing rate of 2°C/min, and a frequency of 1 Hz by dynamic viscoelasticity measurement using Dynamic Viscoelastic Analyzer DVA220 manufactured by IT Measurement Control.

The measurement sample can be created, for example, by dissolving the VdF polymer in N-methyl-2-pyrrolidone (NMP) in such a way as to have a concentration of 10 to 20% by mass to obtain a VdF polymer solution, casting the VdF polymer solution onto a glass plate, drying the cast solution at 100°C for 12 hours, further drying the same under vacuum at 100°C for 12 hours to obtain a film having a thickness of 50 to 100 μm, and cutting the film into a length of 30 mm and a width of 5 mm.

In the composition for an electrochemical device of the present disclosure, the mass ratio of the fluorine-containing copolymer to the other polymer other than the fluorine-containing copolymer, fluorine-containing copolymer/-other polymer, is preferably 99/1 to 1/99, more preferably 97/3 or less, further preferably 95/5 or less, and more preferably 3/97 or more, further preferably 5/95 or more, from the viewpoint of being able to obtain an electrode mixture having less settling of the powder material in the electrode mixture, being able to obtain an electrode material layer having superior flexibility, and being able to obtain a battery having superior cycle characteristics.

In the composition for an electrochemical device of the present disclosure, the mass ratio of the fluorine-containing copolymer to the VdF polymer, fluorine-containing copolymer/VdF polymer, is preferably 99/1 to 1/99, more preferably 97/3 or less, further preferably 95/5 or less, and more preferably 3/97 or more, further preferably 5/95 or more, from the viewpoint of being able to obtain an electrode mixture having less settling of the powder material in the electrode mixture, being able to obtain an electrode material layer having superior flexibility, and being able to obtain a battery having superior cycle characteristics.

The content of the binder in the composition for an electrochemical device of the present disclosure is preferably 0.1 to 20% by mass, more preferably 0.2 to 10% by mass, and further preferably 0.5 to 3% by mass, based on the mass of the composition.

(Solvent)

The composition for an electrochemical device of the present disclosure contains a solvent. Examples of the solvent include water or an organic solvent, and an organic solvent is preferable from the viewpoint of being able to greatly reduce the possibility of water remaining in the electrode material layer when the electrode material layer is formed by using the composition for an electrochemical device.

Examples of the organic solvent include a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; a chain carbonate ester-based solvent such as dimethyl carbonate, diethyl carbonate, ethyl methyl carbonate, butyl butyrate, or ethyl acetate; a cyclic carbonate ester such as ethylene carbonate, propylene carbonate, or 4-fluoro-1,3 dioxolan-2-one; an ether-based solvent such as tetrahydrofuran or dioxane; a β-alkoxypropionamide such as β-methoxy-N,N-dimethylpropionamide, β-n-butoxy-N,N-dimethylpropionamide, or β-n-hexyloxy-N,N-dimethylpropionamide; a phosphate ester such as triethyl phosphate or trimethyl phosphate; and a low-boiling general-purpose organic solvent such as mixed solvents thereof.

The organic solvent can also be a solvent represented by a general formula (1).

General formula (1):

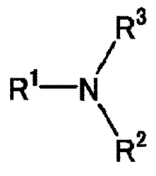

wherein $R^1$, $R^2$, and $R^3$ are each independently H or a monovalent substituent,

provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

The solvent represented by a general formula (1) is preferably at least one selected from the group consisting of 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetoacetamide, N-octyl-2-pyrrolidone, and N,N-diethylacetamide.

From the viewpoint of excellent applicability, the solvent is, among others, preferably water, or at least one selected from the group consisting of N,N-dimethylformamide, N,N-dimethylacetamide, N-methyl-2-pyrrolidone, and a solvent represented by the general formula (1), more preferably at least one selected from the group consisting of N,N-dimethylformamide, N,N-dimethylacetamide, N-methyl-2-pyrrolidone, 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetoacetamide, N-octyl-2-pyrrolidone, and N,N-diethylacetamide, further preferably at least one selected from the group consisting of N-methyl-2-pyrrolidone, N,N-dimethylacetamide, 3-methoxy-N,N-dimethylpropanamide, N-ethyl-2-pyrrolidone, and N-butyl-2-pyrrolidone, and particularly preferably at least one selected from the group consisting of N-methyl-2-pyrrolidone and N,N-dimethylacetamide.

The amount of the solvent in the composition for an electrochemical device is determined in consideration of coating of the current collector, formation of a thin film after drying, and the like. Usually, the proportion by mass of the binder to the solvent is 0.5:99.5 to 20:80.

The viscosity of the composition for an electrochemical device of the present disclosure is preferably 5 to 8,000 mPa·s, more preferably 100 to 5,000 mPa·s, and further preferably 100 to 2,000 mPa·s. The viscosity can be measured under conditions of 25°C, and rotor No. SC4-21, and a rotation speed of 20 rpm by using a B-type viscometer (LV-DV2T, manufactured by Brookfield).

(Use)

The composition for an electrochemical device of the present disclosure can be suitably used to form an electrode of an electrochemical device. In some embodiments, the composition for an electrochemical device of the present disclosure may be a composition for electrode formation.

The composition for an electrochemical device of the present disclosure can be suitably used as a material for forming an electrode of a battery such as a secondary battery or a capacitor. The battery may be a primary battery in some embodiments, and may be a storage battery (secondary battery) or an energy storage element in other embodiments. In some embodiments, the battery may be a non-aqueous electrolytic solution battery. The non-aqueous electrolytic solution battery includes all batteries including an electrolytic solution and a power generation element. Examples of the non-aqueous electrolytic solution battery include a lithium ion primary battery, a lithium ion secondary battery, a nickel hydrogen battery, a lithium ion capacitor, and an electric double layer capacitor.

The composition for an electrochemical device of the present disclosure may be a composition for positive electrode formation used to create a positive electrode in some embodiments, and may be a composition for negative electrode formation used to create a negative electrode in other embodiments. The electrode material layer formed from the composition for an electrochemical device of the present disclosure may be a positive electrode material layer in some embodiments, and may be a negative electrode material layer in other embodiments.

(Other component)

The composition for an electrochemical device of the present disclosure preferably further contains a powder electrode material, excluding a single-walled carbon nanotube.

The powder electrode material is a powder electrode material used for a battery, and preferably includes an electrode active material. The electrode active material is divided into a positive electrode active material and a negative electrode active material.

The positive electrode active material may be a material that can electrochemically absorb and desorb a lithium ion, and is preferably a lithium composite oxide, and more preferably a lithium transition metal composite oxide. The positive electrode active material is also preferably a lithium-containing transition metal phosphate compound. The positive electrode active material is also preferably a substance containing lithium and at least one transition metal, such as a lithium transition metal composite oxide or a lithium-containing transition metal phosphate compound.

Preferable examples of the transition metal of the lithium transition metal composite oxide include V, Ti, Cr, Mn, Fe, Co, Ni, and Cu, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and compounds obtained by replacement of a part of the transition metal atoms

mainly constituting these lithium transition metal composite oxides with another metal such as Al, Ti, V, Cr, Mn, Fe, Co, Li, Ni, Cu, Zn, Mg, Ga, Zr, or Si. Examples of the compounds obtained by replacement include a lithium-nickel-manganese composite oxide, a lithium-nickel-cobalt-aluminum composite oxide, a lithium-nickel-cobalt-manganese composite oxide, a lithium-manganese-aluminum composite oxide, and a lithium-titanium composite oxide, and more specific examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMn_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

Preferable examples of the transition metal of the lithium-containing transition metal phosphate compound include V, Ti, Cr, Mn, Fe, Co, Ni, and Cu, and specific examples of the lithium-containing transition metal phosphate compound include an iron phosphate compound such as $LiFePO_4$, $Li_3Fe_2(PO_4)_3$, or $LiFeP_2O_7$, a cobalt phosphate compound such as $LiCoPO_4$, and compounds obtained by replacement of a part of the transition metal atoms mainly constituting these lithium transition metal phosphate compounds with another metal such as Al, Ti, V, Cr, Mn, Fe, Co, Li, Ni, Cu, Zn, Mg, Ga, Zr, Nb, or Si.

In particular, $LiCoO_2$, $LiNiO_2$, $LiMn_2O_4$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable from the viewpoint of high voltage, high energy density, charge/discharge cycle characteristics, or the like.

In addition, the lithium transition metal composite oxide is preferably a lithium-nickel-based composite oxide, and more preferably a lithium-nickel-based composite oxide represented by the general formula (7):

general formula (7) : $Li_yNi_{1-x}M_xO_2$

wherein x is $0.01 \leq x \leq 0.5$, y is $0.9 \leq y \leq 1.2$, and M represents a metal atom excluding Li and Ni. The lithium transition metal composite oxide having such a high nickel content is beneficial for increasing the capacity of a secondary battery.

In the general formula (7), x is a coefficient satisfying $0.01 \leq x \leq 0.5$, and from the viewpoint of being able to obtain a secondary battery having a higher capacity, preferably $0.05 \leq x \leq 0.4$ and more preferably $0.10 \leq x \leq 0.3$.

In the general formula (7), examples of the metal atom of M include V, Ti, Cr, Mn, Fe, Co, Cu, Al, Zn, Mg, Ga, Zr, and Si. The metal atom of M is preferably a transition metal such as V, Ti, Cr, Mn, Fe, Co, or Cu, or a combination of any of the above transition metals and a further metal such as Al, Ti, V, Cr, Mn, Fe, Co, Cu, Zn, Mg, Ga, Zr, or Si.

The lithium transition metal composite oxide having a high nickel content is preferably at least one selected from the group consisting of $LiNi_{0.80}Co_{0.15}Al_{0.05}O_2$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$, and more preferably at least one selected from the group consisting of $LiNi_{0.82}Co_{0.15}Al_{0.03}O_2$, $LiNi_{0.6}Mn_{0.2}Co_{0.2}O_2$, and $LiNi_{0.8}Mn_{0.1}Co_{0.1}O_2$.

In addition, these positive electrode active materials used may each have a surface to which a substance different in formulation from the substance mainly constituting the positive electrode active material adheres. Examples of the surface adhering substance include an oxide such as aluminum oxide, silicon oxide, titanium oxide, zirconium oxide, magnesium oxide, calcium oxide, boron oxide, antimony oxide, or bismuth oxide, a sulfate such as lithium sulfate, sodium sulfate, potassium sulfate, magnesium sulfate, calcium sulfate, or aluminum sulfate, and a carbonate such as lithium carbonate, calcium carbonate, or magnesium carbonate.

These surface adhering substances can each be adhered to the surface of a positive electrode active material, for example, by a method involving dissolving or suspending the surface adhering substance in a solvent to add the resulting solution or suspension to the positive electrode active material by impregnation and drying the same, a method involving dissolving or suspending a surface adhering substance precursor in a solvent to add the resulting solution or suspension to the positive electrode active material by impregnation and then reacting these by heating or the like, or a method involving adding the surface adhering substance to a positive electrode active substance precursor and simultaneously calcining these.

The lower limit of the amount by mass of the surface adhering substance used is preferably 0.1 ppm or more, more preferably 1 ppm or more, and further preferably 10 ppm or more, and the upper limit thereof is preferably 20% or less, more preferably 10% or less, and further preferably 5% or less based on the positive electrode active material. The surface adhering substance can suppress the oxidation reaction of the non-aqueous electrolytic solution on the surface of the positive electrode active material and improve the battery life, and if the amount thereof adhered is too small, the effects thereof are not sufficiently developed, and if the amount is too large, the resistance may increase because the surface adhering substance inhibits the entry and exit of a lithium ion.

A particle of the positive electrode active material may have a blocky shape, a polyhedral shape, a spherical shape, an oval shape, a plate-like shape, a needle-like shape, a columnar shape, or the like as conventionally used, and among these, preferably, a primary particle aggregates to form a secondary particle that has a spherical shape or an oval shape. Usually, the active material in the electrode expands and contracts with the charge and discharge of an electrochemical element, and thus the stress thereof is likely to cause a deterioration such as destruction of the active material or disconnection of a conductive path. Because of this, an active material in which a primary particle aggregates to form a secondary particle is more preferable than a single particle active material containing only a primary particle

because the former relaxes the stress of expansion and contraction and prevents a deterioration. In addition, a particle having a spherical shape or an oval shape is more preferable than an axially oriented particle such as a particle having a plate-like shape because the former particle is less oriented when an electrode is molded and thus the electrode also expands and contracts less during charge and discharge, and even when the former particle is mixed with a conductive agent in electrode creation, it is easy to mix the former particle uniformly.

The tap density of the positive electrode active material is usually 1.3 $g/cm^3$ or more, preferably 1.5 $g/cm^3$ or more, further preferably 1.6 $g/cm^3$ or more, and most preferably 1.7 $g/cm^3$ or more. If the tap density of the positive electrode active material is lower than the above lower limit, when forming a positive electrode material layer, the required amount of a dispersion medium increases, the required amount of a conductive agent or a copolymer increases, and the rate of filling of the positive electrode material layer with the positive electrode active material may be limited to limit the battery capacity. A high density positive electrode material layer can be formed by using a metal composite oxide powder having a high tap density. In general, a larger tap density is more preferable, and there is no particular upper limit thereon, and if the tap density is too large, the diffusion of a lithium ion using a non-aqueous electrolytic solution as a medium in the positive electrode material layer may be rate-determining to easily reduce the load characteristics, and thus the upper limit of the tap density is usually 2.5 $g/cm^3$ or less and preferably 2.4 $g/cm^3$ or less.

The density determined as follows is defined as the tap density of the positive electrode active material: a sample is passed through a sieve having an opening size of 300 $\mu$m, dropped into a tapping cell of 20 $cm^3$ to fill the cell volume, then tapping is carried out at a stroke length of 10 mm 1000 times using a powder density measuring instrument (for example, Tap Denser manufactured by Seishin Enterprise Co., Ltd.), and the density is determined from the volume at that time and the weight of the sample.

The median diameter d50 (secondary particle size when a primary particle aggregates to form a secondary particle) of the particle of the positive electrode active material is usually 0.1 $\mu$m or more, preferably 0.5 $\mu$m or more, more preferably 1 $\mu$m or more, most preferably 3 $\mu$m or more, and usually 20 $\mu$m or less, preferably 18 $\mu$m or less, more preferably 16 $\mu$m or less, most preferably 15 $\mu$m or less. If d50 is lower than the above lower limit, it may not be possible to obtain a high bulk density product, and if d50 exceeds the upper limit, for example the following problems may occur: it takes time to diffuse lithium in the particles, resulting in reduction in battery performance, and when creating a positive electrode of a battery, that is, slurrying an active material and a conductive agent, a copolymer, or the like using a solvent to apply the resulting slurry in the form of a thin film, a streak is formed. Here, mixing of two or more positive electrode active materials having different median diameters d50 can also further improve the filling property when creating a positive electrode.

The median diameter d50 in the present disclosure is measured using a known laser diffraction/scattering type particle size distribution measurement apparatus. When LA-920 manufactured by HORIBA, Ltd. is used as a particle size distribution analyzer, d50 is measured by using a 0.1% by mass sodium hexametaphosphate aqueous solution as a dispersion medium used for the measurement, carrying out ultrasonic dispersion for 5 minutes, and then setting the measurement refractive index to 1.24.

When a primary particle aggregates to form a secondary particle, the average primary particle size of the positive electrode active material is usually 0.01 $\mu$m or more, preferably 0.05 $\mu$m or more, further preferably 0.08 $\mu$m or more, most preferably 0.1 $\mu$m or more, and usually 3 $\mu$m or less, preferably 2 $\mu$m or less, further preferably 1 $\mu$m or less, most preferably 0.6 $\mu$m or less. If the average primary particle size exceeds the above upper limit, it is difficult to form a spherical secondary particle, which adversely affects the powder filling property and greatly reduces the specific surface area, and thus battery performance such as output characteristics may be likely to decrease. On the contrary, if the average primary particle size is lower than the above lower limit, a crystal is usually underdeveloped, which may cause a problem such as poor charge/discharge reversibility. The primary particle size is measured by observation using a scanning electron microscope (SEM). Specifically, the primary particle size is determined by obtaining the value of the longest segment of a straight line in the horizontal direction formed by the left and right boundary lines of a primary particle on a photograph at a magnification of 10,000 times for each of any 50 primary particles and averaging the obtained values.

The BET specific surface area of the positive electrode active material is 0.2 $m^2/g$ or more, preferably 0.3 $m^2/g$ or more, further preferably 0.4 $m^2/g$ or more, and 4.0 $m^2/g$ or less, preferably 2.5 $m^2/g$ or less, further preferably 1.5 $m^2/g$ or less. If the BET specific surface area is smaller than this range, the battery performance easily decreases, and if the BET specific surface area is larger than this range, the tap density does not easily increase, and a problem may easily occur in the coating performance when forming the positive electrode material layer.

The BET specific surface area is defined as a value determined using a surface area meter (for example, a fully automatic surface area measurement apparatus manufactured by Ohkura Riken) by pre-drying a sample at 150°C for 30 minutes under a nitrogen flow and then measuring the sample by the nitrogen adsorption BET single point method according to the gas flow method using a nitrogen helium mixed gas accurately adjusted such that the value of nitrogen pressure relative to atmospheric pressure is 0.3.

The method for producing a positive electrode active material may be a general method used as a method for producing an inorganic compound. In particular, various methods can be considered for creating a spherical or oval active

material, and examples thereof include a method for obtaining an active material by dissolving or pulverizing and dispersing a transition metal raw material such as a transition metal nitrate or sulfate and optionally a raw material of another element in a solvent such as water and regulating the pH while stirring to create and recover a spherical precursor, optionally drying this precursor, then adding a Li source such as LiOH, $Li_2CO_3$, or $LiNO_3$, and calcining the resulting mixture at a high temperature, a method for obtaining an active material by dissolving or pulverizing and dispersing a transition metal raw material such as a transition metal nitrate, sulfate, hydroxide, or oxide and optionally a raw material of another element in a solvent such as water, drying and molding the resulting solution or suspension using a spray dryer or the like to obtain a spherical or oval precursor, adding a Li source such as LiOH, $Li_2CO_3$, or $LiNO_3$ to this precursor, and calcining the resulting mixture at a high temperature, and a method for obtaining an active material by dissolving or pulverizing and dispersing a transition metal raw material such as a transition metal nitrate, sulfate, hydroxide, or oxide, a Li source such as LiOH, $Li_2CO_3$, or $LiNO_3$, and optionally a raw material of another element in a solvent such as water, drying and molding the resulting solution or suspension using a spray dryer or the like to obtain a spherical or oval precursor, and calcining this precursor at a high temperature.

In the present disclosure, one positive electrode active material may be used alone, or two or more positive electrode active material powders having different formulations or different powder physical characteristics may be used together in any combination and ratio.

When the composition for an electrochemical device of the present disclosure contains a positive electrode active material, the content of the single-walled carbon nanotube is preferably 0.001 to 10 parts by mass, and more preferably 0.01 to 2.0 parts by mass, per 100 parts by mass of the positive electrode active material.

When the composition for an electrochemical device of the present disclosure contains a positive electrode active material, the content of the binder is preferably 0.01 to 5.0 parts by mass, and more preferably 0.1 to parts by mass, per 100 parts by mass of the positive electrode active material.

Examples of negative electrode active material include a negative electrode active material that exhibits a potential of 2.5 V or less vs. Li when alloyed with Li or bonded with Li.

The negative electrode active material may be a negative electrode active material containing a metal. The metal included in the negative electrode active material is usually a metal that can be electrochemically alloyed with an alkali metal such as Li or Na.

Examples of the negative electrode active material include a simple metal that can be electrochemically alloyed with Li such as Si, Zn, Sn, W, Al, Sb, Ge, Bi, or In; an alloy including Si, Zn, Sn, W, Al, Sb, Ge, Bi, or In; a lithium alloy such as a lithium aluminum alloy or a lithium tin alloy; a metal oxide such as tin oxide or silicon oxide; lithium titanate. One or two or more of these negative electrode active materials can be used.

The negative electrode active material is preferably a compound containing at least one element selected from the group consisting of Si, Sn, V, Nb, and Ti, more preferably Si (simple Si), an oxide of Si, an alloy containing Si, Sn (Sn carrier), an oxide of Sn, or an alloy containing Sn, and further preferably at least one selected from the group consisting of Si and $SiO_x$ ($0 < x < 2$) .

In addition, the negative electrode active material may be a carbonaceous material such as a graphite powder. The negative electrode active material can be used together with a negative electrode active material containing a metal. Examples of the carbonaceous material include natural graphite, an artificial carbonaceous substance, an artificial graphite substance, and a carbonaceous material obtained by one or more times of heat treatment in the range of 400°C to 3,200°C of a carbonaceous substance {for example, natural graphite, coal-based coke, petroleum-based coke, coal-based pitch, petroleum-based pitch, or a material obtained by oxidation treatment of any of these pitches; needle coke, pitch coke, or a carbon material obtained by partial graphitization of any of these cokes; a pyrolysate of an organic substance such as furnace black, acetylene black, ketjen black, or pitch-based carbon fiber; a carbonizable organic substance (for example, coal tar pitches from soft pitch to hard pitch; a coal-based heavy oil such as dry distillation/liquefaction oil; a straight-run heavy oil such as atmospheric residue or vacuum residue; a cracking-derived petroleum heavy oil such as ethylene tar as a byproduct generated in thermal cracking of crude oil, naphtha, or the like; further, an aromatic hydrocarbon such as acenaphthylene, decacyclene, anthracene, or phenanthrene; a N-ring compound such as phenazine or acridine; a S-ring compound such as thiophene or bithiophene; a polyphenylene such as biphenyl or terphenyl; polyvinyl chloride, polyvinyl alcohol, polyvinyl butyral, or a material obtained by insolubilizing any thereof; a nitrogen-containing organic polymer such as polyacrylonitrile or polypyrrole; a sulfur-containing organic polymer such as polythiophene or polystyrene; a natural polymer such as a polysaccharide typified by cellulose, lignin, mannan, polygalacturonic acid, chitosan, or saccharose; a thermoplastic resin such as polyphenylene sulfide or polyphenylene oxide; a thermosetting resin such as a furfuryl alcohol resin, a phenolformaldehyde resin, or an imide resin) and a carbide of any of these; and a solution obtained by dissolving a carbonizable organic substance in a low-molecular-weight organic solvent such as benzene, toluene, xylene, quinoline, or n-hexane, and a carbide thereof}.

When the negative electrode mixture contains a negative electrode active material containing a metal and a carbonaceous material, the mass ratio of the negative electrode active material containing a metal to the carbonaceous material is preferably 1/99 to 99/1, more preferably 5/95 to 95/5, and further preferably 10/10 to 90/10.

When the composition for an electrochemical device of the present disclosure contains a negative electrode active material, the content of the single-walled carbon nanotube is preferably 0.001 to 10 parts by mass, and more preferably 0.01 to 2.0 parts by mass, per 100 parts by mass of the negative electrode active material.

When the composition for an electrochemical device of the present disclosure contains a negative electrode active material, the content of the binder is preferably 0.01 to 20.0 parts by mass, and more preferably 0.1 to 10.0 parts by mass, per 100 parts by mass of the negative electrode active material.

The content of the electrode active material (positive electrode active material or negative electrode active material) is preferably 40% by mass or more in the composition for electrode formation in order to increase the capacity of the electrode obtained.

The powder electrode material may further include a conductive agent. Examples of the conductive agent include a carbon black such as acetylene black or ketjen black, a carbon material such as graphite, a carbon fiber, a carbon nanotube, a carbon nanohorn, and graphene.

The composition for an electrochemical device may contain, for example, an acrylic resin such as polyacrylic acid, polymethacrylate, or polymethyl methacrylate, a polyimide, polyamide, or polyamideimide-based resin, styrene elastomer, butadiene elastomer, or styrene-butadiene elastomer.

In order to improve the slurry stability, the composition for an electrochemical device may contain a dispersant such as a resin-based dispersant having a surfactant action and the like, a cationic surfactant, or a nonionic surfactant.

The composition for an electrochemical device can be prepared by mixing a single-walled carbon nanotube, a binder, and a solvent. A powder electrode material may be further dispersed or mixed into the obtained composition. Then, the obtained composition is uniformly applied to a current collector such as a metal foil or a metal net, dried, and optionally pressed to form a thin electrode material layer on the current collector to obtain a thin-film electrode. In addition, the composition may be prepared by first mixing a single-walled carbon nanotube, a binder, and a powder electrode material and then adding a solvent.

(Electrode)

The electrode of the present disclosure includes a current collector and an electrode material layer. The electrode material layer is formed by using the composition for an electrochemical device of the present disclosure, and may be provided on one side of the current collector in some embodiments, and may be on each of both sides thereof in other embodiments. The electrode of the present disclosure may be a positive electrode including a positive electrode material layer in some embodiments, and may be a negative electrode having a negative electrode material layer in other embodiments.

The electrode of the present disclosure includes an electrode material layer formed by using the composition for an electrochemical device of the present disclosure, and thus a battery having excellent cycle characteristics can be obtained by using the electrode of the present disclosure in a battery.

The density of the electrode material layer is preferably 1.5 to 5.0 g/cm$^3$, and more preferably 2.0 to 4.5 g/cm$^3$.

The density of the electrode material layer can be calculated from the mass and the volume of the electrode material layer.

The thickness of the electrode material layer is preferably 20 $\mu$m or more, more preferably 30 $\mu$m or more, further preferably 40 $\mu$m or more, particularly preferably 45 $\mu$m or more, and preferably 170 $\mu$m or less, more preferably 150 $\mu$m or less, from the viewpoint of obtaining further superior battery characteristics. In addition, the thickness of the electrode material layer may be 85 $\mu$m or less in some embodiments, and may be less than 69 $\mu$m in other embodiments.

The thickness of the electrode material layer can be measured with a micrometer. The thickness of the electrode material layer in the present disclosure is the thickness per side when the electrode material layer is provided on each of both sides of the current collector.

Examples of the current collector included in the electrode of the present disclosure include a metal foil or a metal net of iron, stainless steel, copper, aluminum, nickel, titanium, or the like, and among these, aluminum foil is preferable.

The electrode of the present disclosure can be suitably produced by a production method involving applying the composition for an electrochemical device of the present disclosure to a current collector. After applying the composition, further, the coating film may be dried, and the resulting dry coating film may be pressed.

The amount of the composition for an electrochemical device applied to the current collector is preferably 10 mg/cm$^2$ or more, more preferably 17.5 mg/cm$^2$ or more, and preferably 60 mg/cm$^2$ or less, more preferably 50 mg/cm$^2$ or less. The amount of the composition applied is the dry weight of the composition per unit area.

(Secondary battery)

In addition, according to the present disclosure, a secondary battery including the above electrode is provided.

The secondary battery of the present disclosure has an electrode formed by using the composition for an

electrochemical device of the present disclosure, and thus has excellent cycle characteristics.

The secondary battery of the present disclosure is preferably one including a positive electrode, a negative electrode, and a non-aqueous electrolytic solution, wherein one or both of the positive electrode and the negative electrode is/are the electrode(s) described above. In addition, the secondary battery of the present disclosure is preferably one including a positive electrode, a negative electrode, and a non-aqueous electrolytic solution, wherein the positive electrode is the electrode described above. In addition, a separator may be interposed between the positive electrode and the negative electrode.

The non-aqueous electrolytic solution is not limited, and may be one or two or more of known solvents such as propylene carbonate, ethylene carbonate, butylene carbonate, γ-butyl lactone, 1,2-dimethoxyethane, 1,2-diethoxyethane, dimethyl carbonate, diethyl carbonate, or ethyl methyl carbonate. Any conventionally known electrolyte can also be used, and $LiClO_4$, $LiAsF_6$, $LiPF_6$, $LiBF_4$, LiCl, LiBr, $CH_3SO_3Li$, $CF_3SO_3Li$, cesium carbonate, or the like can be used.

The electrode of the present disclosure has excellent flexibility and conductivity, has the current collector and the electrode material layer sufficiently adhered to each other, and can form a secondary battery having excellent battery characteristics, and thus can be suitably used as an electrode for a wound type secondary battery. In addition, in some embodiments, the secondary battery of the present disclosure may be a wound type secondary battery.

The electrode of the present disclosure is useful not only for the lithium ion secondary battery using a liquid electrolyte described above, but also for a polymer electrolyte lithium secondary battery, as an electrode for a non-aqueous electrolyte secondary battery. In addition, the electrode of the present disclosure is also useful for an electric double layer capacitor.

The embodiments have been described above, and it will be understood that various modifications of the embodiments and details are possible without departing from the spirit and scope of the claims.

EXAMPLES

Next, the embodiments of the present disclosure will be described with reference to Examples, but the present disclosure is not limited only to the Examples.

The numerical values in the Examples were measured by the following methods.

(Polymer formulation)

The formulation of a fluorine-containing copolymer and a PVdF was measured by a solution NMR method.

Measuring apparatus: VNMRS400 manufactured by Varian, Inc.
Resonance frequency: 376.04 (Sfrq)
Pulse width: 30° (pw = 6.8)

(Content of polar group-containing monomer unit in PVdF)

The content of a polar group-containing monomer unit (acrylic acid unit, 3-butenoic acid unit, or the like) in a PVdF was measured by acid-base titration of a carboxyl group. Specifically, about 0.5 g of a PVdF was dissolved in acetone at a temperature of 70 to 80°C. 5 ml of water was added dropwise under vigorous stirring in such a way as to avoid coagulation of the PVdF. The resulting mixture was subjected to titration with a NaOH aqueous solution having a concentration of 0.1 N until complete neutralization of acidity, with neutral transition at about -270 mV. From the measurement results, the amount of substance of the polar group-containing monomer unit contained in 1 g of the PVdF was determined to calculate the content of the polar group-containing monomer unit.

(Weight average molecular weight)

The weight average molecular weight was measured by gel permeation chromatography (GPC). The weight average molecular weight was calculated from data (reference: polystyrene) obtained by measurement using HLC-8320GPC and columns (three SuperAWM-H connected in series) manufactured by Tosoh Corporation under a flow of dimethylformamide (DMF) as a solvent at a flow rate of 0.3 ml/min.

(Melting point)

The melting point was determined as the temperature corresponding to the maximum value in the heat of fusion curve when the temperature was raised from 30°C to 220°C at a rate of 10°C/min, then lowered to 30°C at 10°C/min, and

raised again to 220°C at a rate of 10°C/min by using a differential scanning calorimetry (DSC) apparatus.

(Mooney viscosity)

The Mooney viscosity was measured according to ASTM-D1646-15 and JIS K6300-1:2013.

Measuring instrument: Model MV2000E manufactured by ALPHA TECHNOLOGIES
Rotor rotation speed: 2 rpm
Measurement temperature: 121°C, 140°C

(Glass transition temperature (Tg))

By using a differential scanning calorimeter (DSC822e manufactured by Mettler Toledo, or X-DSC7000 manufactured by Hitachi High-Tech Science Corporation), the temperature of 10 mg of a sample was raised at 20°C/min to obtain a DSC curve, and the temperature indicating an intersection point of the extensions of the base lines before and after the secondary transition of the DSC curve and the tangent line at an inflection point of the DSC curve was defined as the glass transition temperature.

(Viscosity)

The viscosity of the composition and the positive electrode mixture was measured under conditions of 25°C, rotor No. SC4-21, and a rotation speed of 20 rpm by using a B-type viscometer (LV-DV2T, manufactured by Brookfield), and the measured value 10 minutes after the start of measurement was defined as the viscosity.

<Positive electrode mixture evaluation>

(Settling stability test of positive electrode mixture)

50 g of the positive electrode mixture was dispensed into a 50 cc screw tube, and the screw tube was closed with a lid and allowed to stand for 5 days. After that, 10 g of the upper part of the positive electrode mixture was collected by using a dropper, added to an aluminum cup, and dried at 120°C for 24 hours. The settling stability index (Y5) represented by the initial solid concentration of the positive electrode mixture, Y0, and the weight of the mixture after drying, M5, was calculated by the following expression.

$$Y5 = M5/10/Y0 \times 100\ [\%]$$

<Positive electrode evaluation>

(Peel strength between positive electrode material layer and positive electrode current collector of positive electrode)

The positive electrode including a positive electrode material layer on one side was cut off to create a 1.2 cm × 7.0 cm test piece. The positive electrode material layer side of the test piece was fixed to a movable jig using a double-sided tape, then a tape was attached to the surface of a positive electrode current collector, and the stress (N/m) when the tape was pulled at an angle of 90 degrees at a speed of 100 mm/min were measured using an autograph. 5 N was used for the load cell of the autograph.

(Maximum bending diameter)

A 2 cm × 10 cm test piece was created by cutting off a positive electrode including a positive electrode material layer on each of both sides, and wound around a round bar having a diameter of 1.0 mm, a round bar having a diameter of 2.0 mm, or a round bar having a diameter of 3.0 mm, and the positive electrode was visually observed to check the presence or absence of a crack in the positive electrode material layer, and evaluated according to the following criteria.

ϕ1: No pinhole was found in the positive electrode material layer even when the test piece was wound around the round bar having a diameter of 1.0 mm.
ϕ2: No pinhole was found in the positive electrode material layer even when the test piece was wound around the round bar having a diameter of 2.0 mm, whereas a pinhole was observed in the positive electrode material layer when the test

piece was wound around the round bar having a diameter of 1.0 mm.

$\phi$3: No pinhole was found in the positive electrode material layer even when the test piece was wound around the round bar having a diameter of 3.0 mm, whereas a pinhole was observed in the positive electrode material layer when the test piece was wound around the round bar having a diameter of 2.0 mm.

$\phi$4: A pinhole was found in the positive electrode material layer or the test piece was broken, when the test piece was wound around the round bar having a diameter of 3.0 mm.

(Preparation of electrolytic solution)

Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter, and 2% by mass of vinylene carbonate was added to this mixture to obtain a non-aqueous electrolytic solution.

(Creation of lithium ion secondary battery)

The positive electrode including a positive electrode material layer on one side created in each of Examples and Comparative Examples was cut out into a shape having a coated portion (positive electrode material layer) having a width of 50 mm and a length of 30 mm and an uncoated portion having a width of 5 mm and a length of 9 mm.

1 Part by mass of an aqueous dispersion of carboxymethyl cellulose sodium (concentration of carboxymethyl cellulose sodium of 1% by mass) and 1 part by mass of an aqueous dispersion of styrene butadiene elastomer (concentration of styrene butadiene elastomer of 50% by mass) as a thickener and a binder were added to 98 parts by mass of artificial graphite and mixed using a disperser to form a slurry. The obtained slurry was applied to a copper foil having a thickness of 20 μm, dried, and rolled using a press, the rolled foil was cut out into a shape having a coated portion (negative electrode material layer) having a width of 52 mm and a length of 32 mm and an uncoated portion having a width of 5 mm and a length of 9 mm, and the cut foil was used as the negative electrode.

(Creation of aluminum laminated cell)

The positive electrode and the negative electrode were opposed to each other via a microporous polyethylene film (separator) having a thickness of 20 μm, the non-aqueous electrolytic solution obtained above was injected, the non-aqueous electrolytic solution was caused to sufficiently permeate into the separator and the like, and then the workpiece was sealed, precharged, and aged to create an aluminum laminate cell (lithium ion secondary battery).

<Battery characteristics>

For the obtained aluminum laminated cell (lithium ion secondary battery), the output characteristics, the cycle capacity retention rate, and the resistance increase rate were investigated as follows.

(Initial positive electrode discharge capacity utilization rate)

At 25°C, the secondary battery produced above was charged to 4.2 V at a constant current corresponding to 0.2 C, and then discharged to 3.0 V at a constant current of 0.2 C. 2 cycles of this operation were carried out to stabilize the battery. After that, the battery was charged to 4.2 V at a constant current of 1 C, then charged at a constant voltage of 4.2 V until the current value was 0.05 C, and discharged to 3.0 V at a constant current of 1 C to determine the initial discharge capacity (mAh). Here, the initial discharge capacity (mAh) was divided by the weight of the active material in the positive electrode, thereby obtaining the initial positive electrode discharge capacity utilization rate (mAh/g).

Initial positive electrode discharge capacity utilization rate (mAh/g) = initial discharge capacity (mAh)/weight (g) of active material in positive electrode

The results of calculation thereof in Examples 1 to 21 and Comparative Examples 1 to 5 with the value thereof in Comparative Example 1 set to 100 are shown in Table 1 and Table 2. The results of calculation thereof in Example 22 and Comparative Example 6 with the value thereof in Comparative Example 6 set to 100 are shown in Table 3. The results of calculation thereof in Example 23 and Comparative Example 7 with the value thereof in Comparative Example 7 set to 100 are shown in Table 3. The results of calculation thereof in Example 24 and Comparative Example 8 with the value thereof in Comparative Example 8 set to 100 are shown in Table 3.

(Cycle capacity retention rate)

At 25°C, the lithium ion secondary battery created above was charged to 4.2 V at a constant current corresponding to 0.2 C, and then discharged to 3.0 V at a constant current of 0.2 C. 2 cycles of this operation were carried out to stabilize the battery. After that, at 45°C, the secondary battery produced above was charged to 4.2 V at a constant current of 1 C, then charged at a constant voltage of 4.2 V until the current value was 0.05 C, and discharged to 3.0 V at a constant current of 1 C to determine the initial discharge capacity. Charge and discharge were carried out in the same manner, and the discharge capacity after 500 cycles was measured. The proportion of the discharge capacity after 500 cycles to the initial discharge capacity was determined based on the following expression, and this was defined as the cycle capacity retention (%).

(Discharge capacity after 500 cycles)/(initial discharge capacity) × 100 = cycle capacity retention rate (%)

The results of calculation thereof in Examples 1 to 21 and Comparative Examples 1 to 5 with the value thereof in Comparative Example 1 set to 100 are shown in Table 1 and Table 2. The results of calculation thereof in Example 22 and Comparative Example 6 with the value thereof in Comparative Example 6 set to 100 are shown in Table 3. The results of calculation thereof in Example 23 and Comparative Example 7 with the value thereof in Comparative Example 7 set to 100 are shown in Table 3. The results of calculation thereof in Example 24 and Comparative Example 8 with the value thereof in Comparative Example 8 set to 100 are shown in Table 3.

(Measurement of resistance increase rate)

The resistance (initial resistance) of the battery in the fully charged state at the time of calculating the initial discharge capacity stabilized as described above and the resistance thereof in the fully charged state (measurement condition of 25°C) at the time of the 500 cycle test were measured. The resistance increase rate after the cycle test was determined based on the following expression.

Resistance increase rate (%) = resistance (Ω) after 500 cycle test/resistance (Ω) at the time of calculating initial discharge capacity × 100

The results of calculation thereof in Examples 1 to 21 and Comparative Examples 1 to 5 with the value thereof in Comparative Example 1 set to 100 are shown in Table 1 and Table 2. The results of calculation thereof in Example 22 and Comparative Example 6 with the value thereof in Comparative Example 6 set to 100 are shown in Table 3. The results of calculation thereof in Example 23 and Comparative Example 7 with the value thereof in Comparative Example 7 set to 100 are shown in Table 3. The results of calculation thereof in Example 24 and Comparative Example 8 with the value thereof in Comparative Example 8 set to 100 are shown in Table 3.

<Negative electrode mixture evaluation>

(Settling stability test of negative electrode mixture)

50 g of the negative electrode mixture was dispensed into a 50 cc screw tube, and the screw tube was closed with a lid and allowed to stand for 5 days. After that, 10 g of the upper part of the negative electrode mixture was collected by using a dropper, added to an aluminum cup, and dried at 120°C for 24 hours. The settling stability index (Y5) represented by the initial solid concentration of the negative electrode mixture, Y0, and the weight of the mixture after drying, M5, was calculated by the following expression. The results are shown in Table 4.

$$(Y5 = M5/10/Y0 \times 100\ [\%])$$

<Negative electrode evaluation>

(Maximum test force)

Bending strength (3-point bending test) was measured by a method according to ASTM D790. A negative electrode including a negative electrode material layer on each of both sides was cut into a size of 15 mm × 20 mm to prepare a test piece. According to the 3-point bending method, the test piece was disposed between a first point and a

second point, which were 10 mm apart, and the center (third point) of the test piece was pushed at a constant speed in the test piece thickness direction by using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe. Results are shown in Table 4.

(Preparation of electrolyte)

Ethylene carbonate, which is a high dielectric constant solvent, and ethylmethyl carbonate, which is a low viscosity solvent, were mixed such that the volume ratio therebetween was 30:70, $LiPF_6$ was added to the resulting mixture in such a way as to have a concentration of 1.0 mol/liter, and 2% by mass of vinylene carbonate was added to this mixture to obtain a non-aqueous electrolyte.

(Creation of lithium ion secondary battery)

The negative electrode including a negative electrode material layer on one side created in each of the Examples and the Comparative Examples was cut out into a shape having a coated portion (negative electrode material layer) having a width of 52 mm and a length of 32 mm and an uncoated portion having a width of 5 mm and a length of 9 mm.

(Creation of positive electrode)

97 Parts by mass of $LiNi_{0.8}Mn_{0.1}Co_{0.1}O_2$ (NMC811) as a positive electrode active material, 1.5 parts by mass of acetylene black (AB) as a conductive aid, and 1.5 parts by mass of a PVdF (B-1: 8% by mass NMP solution) were mixed to prepare a positive electrode mixture having a viscosity of 10,000 to 20,000 mPa·s. The obtained positive electrode mixture was uniformly applied to one side of a positive electrode current collector (aluminum foil having a thickness of 20 μm) and dried at 120°C for 60 minutes to completely volatilize N-methyl-2-pyrrolidone (NMP), and then the positive electrode current collector was pressed by applying a pressure of 10 tons by using a roll press, to create a positive electrode including a positive electrode material layer on one side of the positive electrode current collector. The coating mass of the positive electrode mixture was 20.0 mg/cm$^2$, and the density of the positive electrode material layer was 3.6 g/cm$^2$. The positive electrode including a positive electrode material layer on one side created was cut out into a shape having a coated portion (positive electrode material layer) having a width of 50 mm and a length of 30 mm and an uncoated portion having a width of 5 mm and a length of 9 mm.

(Creation of aluminum laminated cell)

The positive electrode and the negative electrode were opposed to each other via a microporous polyethylene film (separator) having a thickness of 20 μm, the non-aqueous electrolyte obtained above was injected, the non-aqueous electrolyte was caused to sufficiently permeate into the separator and the like, and then the workpiece was sealed, precharged, and aged to create an aluminum laminate cell (lithium ion secondary battery).

<Battery characteristics>

For the obtained aluminum laminated cell (lithium ion secondary battery), the cycle capacity retention rate was investigated as follows.

(Cycle capacity retention rate)

At 25°C, the lithium ion secondary battery created above was charged to 4.2 V at a constant current corresponding to 0.2 C, and then discharged to 3.0 V at a constant current of 0.2 C. 2 cycles of this operation were carried out to stabilize the battery. After that, at 45°C, the secondary battery produced above was charged to 4.2 V at a constant current of 1 C, then charged at a constant voltage of 4.2 V until the current value was 0.05 C, and discharged to 3.0 V at a constant current of 1 C to determine the initial discharge capacity. Charge and discharge were carried out in the same manner, and the discharge capacity after 300 cycles was measured. The proportion of the discharge capacity after 300 cycles to the initial discharge capacity was determined based on the following expression, and this was defined as the cycle capacity retention (%).

(Discharge capacity after 300 cycles)/(initial discharge capacity) × 100 = cycle capacity retention rate (%)

The results of calculation thereof in Examples 25 to 28 and Comparative Example 9 with the value thereof in Comparative Example 9 set to 100 are shown in Table 4.

In the Examples and the Comparative Examples, the following polymers were used as binders.

<Fluorine-containing copolymer (A)>

(A-1): 2,3,3,3-Tetrafluoropropene/VdF copolymer Molar ratio of 2,3,3,3-tetrafluoropropene to VdF (2,3,3,3-tetrafluoropropene/VdF): 23.0/77.0

Weight average molecular weight: 520,000
Melting point: N/A

(A-2): 2,3,3,3-Tetrafluoropropene/VdF copolymer Molar ratio of 2,3,3,3-tetrafluoropropene to VdF (2,3,3,3-tetrafluoropropene/VdF): 22.0/78.0

Weight average molecular weight: 490,000
Melting point: N/A

(A-3): 2,3,3,3-Tetrafluoropropene/VdF copolymer Molar ratio of 2,3,3,3-tetrafluoropropene to VdF (2,3,3,3-tetrafluoropropene/VdF): 22.8/77.2

Weight average molecular weight: 1,600,000
Melting point: N/A

(A-4): 2,3,3,3-Tetrafluoropropene/VdF copolymer Molar ratio of 2,3,3,3-tetrafluoropropene to VdF (2,3,3,3-tetrafluoropropene/VdF): 26.0/74.0

Weight average molecular weight: 2,000,000
Melting point: N/A

(A-5): 2,3,3,3-Tetrafluoropropene/VdF copolymer Molar ratio of 2,3,3,3-tetrafluoropropene to VdF (2,3,3,3-tetrafluoropropene/VdF): 15.9/84.1

Weight average molecular weight: 1,000,000
Melting point: N/A

(A-6): 2,3,3,3-Tetrafluoropropene/VdF copolymer Molar ratio of 2,3,3,3-tetrafluoropropene to VdF (2,3,3,3-tetrafluoropropene/VdF): 35.9/64.1

Weight average molecular weight: 800,000
Melting point: N/A

(A-7): 2,3,3,3-Tetrafluoropropene/VdF copolymer Molar ratio of 2,3,3,3-tetrafluoropropene to VdF (2,3,3,3-tetrafluoropropene/VdF): 7.5/92.5

Weight average molecular weight: 940,000
Melting point: 168.9°C

(A-8): AEHF-1/VdF copolymer Molar ratio of perfluoro-(2,9,9-trihaloid-5-trifluoromethyl-3,6-dioxa-8-heptene) (AEHF-1) to VdF (AEHF-1/VdF): 18.6/81.4

Weight average molecular weight: 1,000,000
Melting point: N/A

(A-9): Hexafluoropropylene/VdF copolymer Molar ratio of hexafluoropropylene to VdF (hexafluoropropylene/VdF):

5.0/95.0

Weight average molecular weight: 700,000
Melting point: 135°C

The fluorine-containing copolymers were produced by the following methods.

Production Example 1 (Fluorine-containing copolymer A-1)

84.9 L of pure water was placed in a 138 L stainless steel autoclave, the autoclave was purged with nitrogen and slightly pressurized with vinylidene fluoride (VdF), the temperature thereof was adjusted to 80°C while stirring at 180 rpm, VdF was injected under pressure to 0.64 MPa, and further a mixed solution monomer of VdF and 2,3,3,3-tetrafluoropropene at a molar ratio of 78.0/22.0 was injected under pressure to 0.80 MPa. 84.92 g of ammonium persulfate dissolved in 300 ml of pure water was injected under nitrogen pressure to start polymerization. A continuous monomer was supplied in such a way as to maintain the pressure at 0.8 MPa, 42.46 g of ammonium persulfate dissolved in 300 ml of pure water was injected under nitrogen pressure after 3 hours, and after 6.8 hours, when 25.48 kg of the continuous monomer was fed, the autoclave was vented and cooled to recover 110 kg of a dispersion. The solid content of the dispersion was 22.84 wt%. Aluminum sulfate was added to this dispersion to cause coagulation, and the resulting coagulated product was dried to obtain 25.2 kg of a polymer. The obtained polymer contained 2,3,3,3-tetrafluoropropene and VdF at a molar ratio of 23.0/77.0. It was determined that the Mooney viscosity of the obtained polymer at 140°C was 26, it was determined that the weight average molecular weight was 520,000, and it was determined by DSC that the Tg was -13°C.

Production Example 2 (Fluorine-containing copolymer A-2)

4,000 ml of pure water was placed in a 6 L stainless steel autoclave, the autoclave was purged with nitrogen, 0.74 ml of 2-methylbutane was placed under vacuum, then the autoclave was slightly pressurized with vinylidene fluoride (VdF), the temperature thereof was adjusted to 80°C while stirring at 600 rpm, VdF was injected under pressure to 1.64 MPa, and further a mixed solution monomer of VdF and 2,3,3,3-tetrafluoropropene at a molar ratio of 77.5/22.5 was injected under pressure to 2.001 MPa. 0.952 g of ammonium persulfate dissolved in 5 ml of pure water was injected under nitrogen pressure to start polymerization. A continuous monomer was supplied in such a way as to maintain the pressure at 2.0 MPa, 0.952 g of ammonium persulfate dissolved in 5 ml of pure water was injected under nitrogen pressure after 3 hours, and after 8.4 hours, when 1.2 kg of the continuous monomer was fed, the autoclave was vented and cooled to recover 5.2 kg of a dispersion. The solid content of the dispersion was 23.47 wt%. Aluminum sulfate was added to this dispersion to cause coagulation, and the resulting coagulated product was dried to obtain 1.2 kg of a polymer. The obtained polymer contained 2,3,3,3-tetrafluoropropene and VdF at a molar ratio of 22.0/78.0. It was determined that the Mooney viscosity of the obtained polymer at 140°C was 40, it was determined that the weight average molecular weight was 490,000, and it was determined by DSC that the Tg was -13°C.

Production Example 3 (Fluorine-containing copolymer A-3)

4,000 ml of pure water was placed in a 6 L stainless steel autoclave, the autoclave was purged with nitrogen, 0.09 ml of 2-methylbutane was placed under vacuum, then the autoclave was slightly pressurized with vinylidene fluoride (VdF), the temperature thereof was adjusted to 80°C while stirring at 600 rpm, VdF was injected under pressure to 1.62 MPa, and further a mixed solution monomer of VdF and 2,3,3,3-tetrafluoropropene at a molar ratio of 76.5/23.5 was injected under pressure to 2.001 MPa. 0.952 g of ammonium persulfate dissolved in 5 ml of pure water was injected under nitrogen pressure to start polymerization. A continuous monomer was supplied in such a way as to maintain the pressure at 2.0 MPa, and after 3.6 hours, when 1.0 kg of the continuous monomer was fed, the autoclave was vented and cooled to recover 5.0 kg of a dispersion. The solid content of the dispersion was 20.27 wt%. Aluminum sulfate was added to this dispersion to cause coagulation, and the resulting coagulated product was dried to obtain 1.0 kg of a polymer. The obtained polymer contained 2,3,3,3-tetrafluoropropene and VdF at a molar ratio of 22.8/77.2. It was determined that the Mooney viscosity of the obtained polymer at 140°C was 135, it was determined that the weight average molecular weight was 1,600,000, and it was determined by DSC that the Tg was -12°C.

Production Example 4 (Fluorine-containing copolymer A-4)

4,000 ml of pure water was placed in a 6 L stainless steel autoclave, the autoclave was purged with nitrogen, 0.04 ml of 2-methylbutane was placed under vacuum, then the autoclave was slightly pressurized with vinylidene fluoride (VdF), the temperature thereof was adjusted to 80°C while stirring at 600 rpm, VdF was injected under pressure to 1.0 MPa,

and further a mixed solution monomer of VdF and 2,3,3,3-tetrafluoropropene at a molar ratio of 73.5/26.5 was injected under pressure to 2.000 MPa. 0.476 g of ammonium persulfate dissolved in 5 ml of pure water was injected under nitrogen pressure to start polymerization. A continuous monomer was supplied in such a way as to maintain the pressure at 2.0 MPa, and after 5.6 hours, when 0.72 kg of the continuous monomer was fed, the autoclave was vented and cooled to recover 4.8 kg of a dispersion. The solid content of the dispersion was 15.44 wt%. Aluminum sulfate was added to this dispersion to cause coagulation, and the resulting coagulated product was dried to obtain 0.78 kg of a polymer. The obtained polymer contained 2,3,3,3-tetrafluoropropene and VdF at a molar ratio of 26.0/74.0. It was determined that the Mooney viscosity of the obtained polymer at 140°C was 144, it was determined that the weight average molecular weight was 2,000,000, and it was determined by DSC that the Tg was -8°C.

Production Example 5 (Fluorine-containing copolymer A-5)

1,750 ml of pure water, 0.3503 g of a 50% aqueous solution of $CH_2=CFCF_2OCF(CF_3)CF_2OCF(CF_3)COONH_4$, and 7.003 g of a 50% aqueous solution of $C_5F_{11}COONH_4$ were placed in a 3 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.37 MPa, and further a mixed solution monomer of VdF and 2,3,3,3-tetrafluoropropene at a molar ratio of 84.5/15.5 was injected under pressure to 1.499 MPa. 0.12 ml of 2-methylbutane and 0.4165 g of ammonium persulfate dissolved in 10 ml of pure water were injected under nitrogen pressure to start polymerization. A continuous monomer was supplied in such a way as to maintain the pressure at 1.5 MPa, and after 5.6 hours, when 600 g of the continuous monomer was fed, the autoclave was vented and cooled to recover 2,336 g of a dispersion. The solid content of the dispersion was 26.62 wt%. Aluminum sulfate was added to this dispersion to cause coagulation, and the resulting coagulated product was dried to obtain 630 g of a polymer. The obtained polymer contained 2,3,3,3-tetrafluoropropene and VdF at a molar ratio of 15.9/84.1. It was determined that the Mooney viscosity of the obtained polymer at 140°C was 104, it was determined that the weight average molecular weight was 1,000,000, and it was determined by DSC that the Tg was -20°C.

Production Example 6 (Fluorine-containing copolymer A-6)

1,750 ml of pure water, 0.3501 g of a 50% aqueous solution of $CH_2=CFCF_2OCF(CF_3)CF_2OCF(CF_3)COONH_4$, and 7.000 g of a 50% aqueous solution of $C_5F_{11}COONH_4$ were placed in a 3 L stainless steel autoclave, the autoclave was purged with nitrogen and slightly pressurized with vinylidene fluoride (VdF), the temperature thereof was adjusted to 80°C while stirring at 600 rpm, VdF was injected under pressure to 1.09 MPa, and further a mixed solution monomer of VdF and 2,3,3,3-tetrafluoropropene at a molar ratio of 64.5/35.5 was injected under pressure to 1.503 MPa. 0.12 ml of 2-methylbutane and 0.4165 g of ammonium persulfate dissolved in 10 ml of pure water were injected under nitrogen pressure to start polymerization. A continuous monomer was supplied in such a way as to maintain the pressure at 1.5 MPa, and after 7.7 hours, when 600 g of the continuous monomer was fed, the autoclave was vented and cooled to recover 2,378 g of a dispersion. The solid content of the dispersion was 26.77 wt%. Aluminum sulfate was added to this dispersion to cause coagulation, and the resulting coagulated product was dried to obtain 630 g of a polymer. The obtained polymer contained 2,3,3,3-tetrafluoropropene and VdF at a molar ratio of 35.9/64.1. It was determined that the Mooney viscosity of the obtained polymer at 140°C was 52, it was determined that the weight average molecular weight was 800,000, and it was determined by DSC that the Tg was 0°C.

Production Example 7 (Fluorine-containing copolymer A-7)

1,400 g of pure water, 0.7 g of methylcellulose, 40 g of 2,3,3,3-tetrafluoropropene, 495 g of VdF, 3.0 g of ethyl acetate, and 1 g of di-normal propyl peroxydicarbonate were fed into an autoclave having an internal volume of 2.5 liters, and the temperature thereof was raised to 45°C over 1.5 hours and then maintained at 45°C for 19 hours. The maximum ultimate pressure during this period was 6.0 MPaG. Polymerization was completed 19 hours after the temperature was raised to 45°C. After completion of the polymerization, the resulting copolymer slurry was recovered, dehydrated, and washed with water, and further dried at 118°C for 12 hours to obtain a copolymer powder. The obtained polymer contained 2,3,3,3-tetrafluoropropene and VdF at a molar ratio of 7.5/92.5. It was determined that the weight average molecular weight was 940,000, and it was determined by DSC that the melting point was 168.9°C.

Production Example 8 (Fluorine-containing copolymer A-8)

2,400 ml of pure water and 600 g of a 50% by mass aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 600 rpm, 25 g of perfluoro-(2,9,9-trihaloid-5-trifluoromethyl-3,6-dioxa-8-heptene) (AEHF-1) was injected under pressure, and VdF was injected under pressure to 2.01 MPa. 0.09 g of ammonium persulfate dissolved in 5 ml of pure water was injected thereinto under nitrogen pressure. When the pressure dropped to 1.98 MPa, 5 g of VdF and 6.363 g of AEHF-1 were fed. This operation was repeated, and after about 20 minutes, when 5 g of VdF was fed, 0.609 g of 1,4-diiodoperfluorobutane and 2 g of water for pushing were injected under nitrogen pressure. Further, after 130 minutes, when 135 g of VdF and 165.438 g of AEHF-1 were fed, the autoclave was vented and cooled to recover 3,317 g of a dispersion. The solid content of the dispersion was 10.77% by mass (amount of polymer of 357 g). Aluminum sulfate was added to this dispersion to cause coagulation, and the resulting coagulated product was dried to obtain 350.2 kg of an elastomer. The obtained elastomer contained VdF and AEHF-1 at a molar ratio of 81.4/18.6. It was determined that the Mooney viscosity of the obtained polymer at 121°C was 15, and it was determined by DSC that the Tg was -27°C.

<PVdF (B)>

(B-1): VdF homopolymer

Weight average molecular weight: 900,000
Melting point: 171°C

(B-2): VdF homopolymer

Weight average molecular weight: 1,800,000
Melting point: 171°C

(B-3): PVdF containing acrylic acid unit

Acrylic acid unit content: 1.0 mol%
Weight average molecular weight: 1,100,000
Melting point: 161°C

(B-4): PVdF containing CTFE unit

CTFE unit content: 2.4 mol%
Weight average molecular weight: 800,000
Melting point: 168°C

(B-5): PVdF containing HFP unit and acrylic acid unit

VdF/HFP = 97.5/2.5 (mol%)
Acrylic acid unit content: 1.0 mol%
Weight average molecular weight: 1,110,000
Melting point: 150°C

(B-6): PVdF containing 3-butenoic acid unit

3-Butenoic acid unit content: 1.0 mol%
Weight average molecular weight: 1,000,000
Melting point: 163°C

In addition, the following positive electrode active materials were used in the Examples and the Comparative Examples.

NMC811: $LiNi_{0.8}Mn_{0.1}Co_{0.1}O_2$
LFP: $LiFePO_4$
LCO: $LiCoO_2$
NCA: $LiNi_{0.83}Co_{0.15}Al_{0.03}O_2$

In addition, in the examples and the comparative examples, the following single-walled carbon nanotubes were used.

Single-walled carbon nanotube (trade name "TUBALL BATT SWCNT", manufactured by OCSiAl)
Average outer diameter: 1.6 ± 0.4 nm
Length: 5 μm or more
Average G/D ratio: 86.5 ± 7.1

Examples 1 to 24 and Comparative Examples 1 to 8

(Preparation of composition)

A fluorine-containing copolymer (A), a PVdF (B), and a single-walled carbon nanotube were dispersed and dissolved in a solvent according to a formulation (mass ratio) shown in Tables 1 to 3, thereby preparing a composition (binder solution). The viscosity of the obtained composition was measured. The results are shown in Tables 1 to 3.

(Preparation of positive electrode mixture)

The obtained composition and the PVdF (B) were mixed such that the mass ratio of fluorine-containing copolymer (A)/PVdF (B) was as shown in Tables 1 to 3. The resulting mixed solution, a positive electrode active material, and acetylene black were mixed to prepare a positive electrode mixture having a viscosity of 10,000 to 20,000 mPa. The formulations of the obtained positive electrode mixtures are shown in Tables 1 to 3.

(Creation of positive electrode)

The obtained positive electrode mixture was uniformly applied to one side of a positive electrode current collector (aluminum foil having a thickness of 20 μm) and dried at 120°C for 60 minutes to completely volatilize N-methyl-2-pyrrolidone (NMP), and then the positive electrode current collector was pressed by applying a pressure of 10 tons by using a roll press, to create a positive electrode including a positive electrode material layer on one side of the positive electrode current collector. The coating mass of the positive electrode mixture was 20.0 $mg/cm^2$, and the density of the positive electrode material layer was 3.6 $g/cm^2$.

In addition, the obtained positive electrode mixture was uniformly applied to both sides of a positive electrode current collector (aluminum foil having a thickness of 20 μm) and dried at 120°C for 60 minutes to completely volatilize NMP, and then the positive electrode current collector was pressed by applying a pressure of 10 tons by using a roll press, to create a positive electrode including a positive electrode material layer on each of both sides of the positive electrode current collector. The coating mass per side of the positive electrode mixture was 32.0 $mg/cm^2$, and the density of the positive electrode material layer was 3.6 $g/cm^3$.

By using the obtained positive electrode, various physical properties were evaluated by the methods described above. Results are shown in Tables 1 to 3.

[Table 1]

Table 1

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Formulation of composition | | | | | | | | | | | | | | |
| Fluorine-containing copolymer (A) | | A-1 | A-2 | A-3 | A-4 | A-5 | A-6 | A-7 | A-8 | A-1 | A-1 | A-1 | A-2 | A-3 |
| Content of fluorine-containing copolymer (A) | wt% | 2 | 2 | 2 | 2 | 2 | 2 | 2 | 2 | 0.2 | 2 | 2 | 2 | 0.2 |
| PVdF(B) | | - | - | - | - | - | - | - | - | B-1 | - | - | - | B-2 |
| Content of PVdF (B) | wt% | - | - | - | - | - | - | - | - | 1.8 | - | - | - | 1.8 |
| Content of single-walled carbon nanotube | wt% | 0.4 | 0.4 | 0.4 | 0.4 | 0.4 | 0.4 | 0.4 | 0.4 | 0.4 | 0.4 | 0.4 | 0.4 | 0.4 |
| Viscosity of composition | mPa·s | 750 | 720 | 880 | 980 | 840 | 820 | 990 | 850 | 680 | 750 | 750 | 720 | 850 |

(continued)

| | | | | | | | | | | | | | | |
|---|---|---|---|---|---|---|---|---|---|---|---|---|---|---|
| Composition of binder in positive electrode mixture | | | | | | | | | | | | | | |
| Fluorine-containing copolymer (A) | | A-1 | A-2 | A-3 | A-4 | A-5 | A-6 | A-7 | A-8 | A-1 | A-1 | A-1 | A-2 | A-3 |
| PVdF(B) | | - | - | - | - | - | - | - | - | B-1 | B-1 | B-1 | B-2 | B-2 |
| Mass ratio (fluorine-containing copolymer (A)/PVdF (B)) | wt% | 100/0 | 100/0 | 100/0 | 100/0 | 100/0 | 100/0 | 100/0 | 100/0 | 5195 | 50/50 | 90/10 | 20/80 | 20/80 |
| Kind of solvent | | | | | | | | | | | | | | |
| ISolvent | | NMP | NMP | NMP | NMP | NMP | NMP | NMP | NMP | NMP | NMP | NMP | NMP | NMP |
| Formulation of positive electrode mixture | | | | | | | | | | | | | | |
| Positive electrode active material | Parts | NMC811 | NMC811 | NMC811 | NMC811 | NMC811 | NMC811 | NMC811 | NMC811 | NMC811 | NMC811 | NMC811 | NMC811 | NMC811 |
| Content of positive electrode active material | Parts | 98.52 | 98.52 | 98.52 | 98.52 | 98.52 | 98.52 | 98.52 | 98.52 | 98.52 | 98.52 | 98.52 | 98.52 | 98.58 |
| Content of acetylene black | Parts | 0.4 | 0.4 | 0.4 | 0.4 | 0.4 | 0.4 | 0.4 | 0.4 | 0.4 | 0.4 | 0.4 | 0.4 | 0.4 |
| Content of single-walled carbon nanotube | Parts | 0.08 | 0.08 | 0.08 | 0.08 | 0.08 | 0.08 | 0.08 | 0.08 | 0.08 | 0.08 | 0.08 | 0.08 | 0.02 |
| Content of binder | Parts | 1.0 | 1.0 | 1.0 | 1.0 | 1.0 | 1.0 | 1.0 | 1.0 | 1.0 | 1.0 | 1.0 | 1.0 | 1.0 |

(continued)

| | | | | | | | | | | | | | | |
|---|---|---|---|---|---|---|---|---|---|---|---|---|---|---|
| Positive electrode mixture evaluation | | | | | | | | | | | | | | |
| | ISettling stability | % | 82 | 81 | 88 | 89 | 85 | 76 | 84 | 83 | 77 | 82 | 81 | 79 | 81 |
| Positive electrode evaluation | | | | | | | | | | | | | | |
| | Peel strength between positive electrode material layer and positive electrode current collector | N/m | 43 | 38 | 50 | 59 | 41 | 35 | 54 | 36 | 24 | 27 | 37 | 30 | 32 |
| | Maximum bending diameter | mm | Φ1 | Φ1 | Φ1 | Φ1 | Φ1 | Φ1 | Φ1 | Φ1 | Φ3 | Φ2 | Φ1 | Φ2 | Φ2 |
| Battery characteristics | | | | | | | | | | | | | | |
| | Initial positive electrode discharge capacity utilization rate | % | 116 | 116 | 116 | 117 | 116 | 115 | 117 | ' 116 | 116 | 117 | 117 | 116 | 116 |
| | Cycle capacity retention rate (45°C, 500 cycles) | % | 114 | 115 | 118 | 118 | 117 | 114 | 118 | 115 | 131 | 130 | 125 | 131 | 127 |
| | Resistance increase rate (45°C, after 500 cycles) | % | 87 | 84 | 82 | 83 | 84 | 88 | 82 | 85 | 73 | 73 | 76 | 73 | 75 |

[Table 2]

Table 2

| | | Example 14 | Example 15 | Example 16 | Example 17 | Example 18 | Example 19 | Example 20 | Example 21 | Comparative Examole 1 | Comparative Example 2 | Comparative Example 3 | Comparative Example 4 3 | Comparative Example 5 |
|---|---|---|---|---|---|---|---|---|---|---|---|---|---|---|
| Formulation of composition | | | | | | | | | | | | | | |
| Fluorine-containing copolymer (A) | | A-3 | A-3 | A-3 | A-4 | A-6 | A-7 | A-8 | A-2 | - | - | - | A-9 | - |
| Content of fluorine-containing copolymer (A) | wt% | 2 | 2 | 2 | 2 | 2 | 2 | 2 | 2 | - | - | - | 2 | - |
| PVdF(B) | | - | - | - | - | - | - | - | - | - | - | - | | B-3 |
| Content of PVdF (B) | wt% | - | - | - | - | - | - | - | - | - | - | - | | 2 |
| Content of single-walled carbon nanotube | wt% | 0.4 | 0.4 | 0.4 | 0.4 | 0.4 | 0.4 | 0.4 | 0.4 | - | - | - | 0.4 | 0.4 |
| Viscosity of composition | mPa·s | 880 | 880 | 880 | 980 | 820 | 990 | 850 | 720 | - | - | - | 770 | 740 |

(continued)

| | | | | | | | | | | | | | | |
|---|---|---|---|---|---|---|---|---|---|---|---|---|---|---|
| Composition of binder in positive electrode mixture | | | | | | | | | | | | | | |
| | Fluorine-containing copolymer (A) | | A-3 | A-3 | A-3 | A-4 | A-6 | A-7 | A-8 | A-2 | - | - | A-9 | A-9 | - |
| | PVdF(B) | | B-3 | B-3 | B-3 | B-4 | B-5 | B-6 | B-3 | B-2 | B-1 | B-3 | B-2 | B-2 | B-3 |
| | Mass ratio (fluorine-containing copolymer (A)/PVdF (B)) | wt% | 20/80 | 20/80 | 20/80 | 40160 | 9515 | 20/80 | 20/80 | 20/80 | 0/100 | 0/100 | 20180 | 20180 | 0/100 |
| Kind of solvent | | | | | | | | | | | | | | |
| | Solvent | | NMP | NMP | NMP | NMP | NMP | NMP | NMP | 3-Methoxy-N,N-dimethyl propanamide | NMP | NMP | NMP | NMP | NMP |

(continued)

| | | | | | | | | | | | | | | |
|---|---|---|---|---|---|---|---|---|---|---|---|---|---|---|
| Formulation of positive electrode mixture | | | | | | | | | | | | | | |
| | Positive electrode active material | Parts | NM-C811 | NM-C811 | NM-C811 | NM-C811 | NM-C811 | NM-C811 | NM-C811 | NMC811 | NMC811 | NMC811 | NMC811 | NMC811 | NMC811 |
| | Content of positive electrode active material | Parts | 98.58 | 98.54 | 98.48 | 97.99 | 9786 | 98.72 | 98.72 | 98.52 | 9800 | 9800 | 9800 | 98.52 | 98.52 |
| | Content of acetylene black | Parts | 0.4 | 0.4 | 0.4 | 1 | 0.1 | 0.4 | 0.4 | 0.4 | 1.0 | 1.0 | 1.0 | 0.4 | 0.4 |
| | Content of single-walled carbon nanotube | Parts | 0.02 | 0.06 | 0.12 | 0.01 | 0.04 | 0.08 | 0.08 | 0.08 | 0 | 0 | 0 | 0.08 | 0.08 |
| | Content of binder | Parts | 1.0 | 1.0 | 1.0 | 1.0 | 20 | 0.8 | 0.8 | 1.0 | 1.0 | 1.0 | 1.0 | 1.0 | 1.0 |
| Positive electrode mixture evaluation | | | | | | | | | | | | | | |
| | lSettling stability | % | 77 | 79 | 78 | 84 | 75 | 80 | 78 | 77 | 65 | 59 | 55 | 53 | 66 |

(continued)

| | | | | | | | | | | | | | | |
|---|---|---|---|---|---|---|---|---|---|---|---|---|---|---|
| Positive electrode evaluation | | | | | | | | | | | | | | |
| Peel strength between positive electrode material layer and positive electrode current collector | N/m | 45 | 50 | 53 | 27 | 70 | 36 | 34 | 35 | 8 | 28 | 11 | 20 | 43 |
| Maximum bending diameter | mm | Φ1 | Φ2 | Φ2 | Φ1 | Φ1 | Φ2 | Φ2 | Φ2 | Φ4 | Φ4 | Φ3 | Φ3 | Φ4 |
| Battery characteristics | | | | | | | | | | | | | | |
| Initial positive electrode discharge capacity utilization rate | % | 116 | 114 | 119 | 116 | 115 | 117 | 117 | 119 | 100 | 101 | 98 | 105 | 107 |
| Cycle capacity retention rate (45°C, 500 cycles) | % | 125 | 130 | 138 | 122 | 119 | 131 | 128 | 132 | 100 | 103 | 92 | 104 | 109 |
| Resistance increase rate (45°C, after 500 cycles) | % | 76 | 72 | 70 | 74 | 75 | 70 | 74 | 71 | 100 | 101 | 116 | 103 | 96 |

[Table 3]

Table 3

| | | | Example 22 | Comparative Example 6 | Example 23 | Comparative Example 7 | Example 24 | Comparative Example 8 |
|---|---|---|---|---|---|---|---|---|
| Formulation of composition | | | | | | | | |
| | Fluorine-containing copolymer (A) | | A-2 | A-9 | A-6 | A-9 | A-3 | A-9 |
| | Content of fluorine-containing copolymer (A) | wt% | 2 | 2 | 2 | 2 | 2 | 2 |
| | PVdF(B) | | - | - | - | - | - | - |
| | Content of PVdF (B) | wt% | - | - | - | - | - | - |
| | Content of single-walled carbon nanotube | wt% | 0.4 | 0.4 | 0.4 | 0.4 | 0.4 | 0.4 |
| | Viscosity of composition | mPa·s | 720 | 770 | 820 | 770 | 880 | 770 |
| Formulation of binder in positive electrode mixture | | | | | | | | |
| | Fluorine-containing copolymer (A) | | A-2 | A-9 | A-6 | A-9 | A-3 | A-9 |
| | PVdF(B) | | B-2 | B-2 | B-3 | B-3 | B.1 | B-1 |
| | Mass ratio (fluorine-containing copolymer (A)/PVdF (B)) | wt% | 10190 | 10190 | 60/40 | 60/40 | 20/80 | 20/80 |
| Kind of solvent | | | | | | | | |
| | Solvent | | NMP | NMP | NMP | NMP | NMP | NMP |

(continued)

| | | | | | | | | |
|---|---|---|---|---|---|---|---|---|
| Formulation of positive electrode mixture | | | | | | | | |
| | Positive electrode active material | Parts | LFP | LFP | LCO | LCO | NCA | NCA |
| | Content of positive electrode active material | Parts | 97.30 | 97.30 | 98.72 | 98.72 | 98.02 | 98.02 |
| | Content of acetylene black | Parts | 0.6 | 0.6 | 0.4 | 0.4 | 0.4 | 0.4 |
| | Content of single-walled carbon nanotube | Parts | 0.1 | 0.1 | 0.08 | 0.08 | 0.08 | 0.08 |
| | Content of binder | Parts | 2.0 | 2.0 | 0.8 | 0.8 | 1.5 | 1.5 |
| Positive electrode mixture evaluation | | | | | | | | |
| | Settling stability | % | 88 | 71 | 78 | 65 | 81 | 56 |
| Positive electrode evaluation | | | | | | | | |
| | Peel strength between positive electrode material layer and positive electrode current collector | N/m | 23 | 11 | 54 | 32 | 15 | 9 |
| | Maximum bending diameter | mm | Φ2 | Φ3 | Φ1 | Φ3 | Φ2 | Φ5 |

(continued)

| Battery characteristics | | | | | | | | |
|---|---|---|---|---|---|---|---|---|
| | initial positive electrode discharge capacity utilization rate | % | 106 | 100 | 109 | 100 | 107 | 100 |
| | Cycle capacity retention rate (45°C, 500 cycles) | % | 106 | 100 | 107 | 100 | 109 | 100 |
| | Resistance increase rate (45°C, after 500 cycles) | % | 93 | 100 | 98 | 100 | 92 | 100 |

Example 25 to 28 and Comparative Example 9 (preparation of negative electrode mixture)

Graphite powder/silicon powder or graphite powder/tin powder as a negative electrode active material, acetylene black as a conductive aid, a fluorine-containang copolymer (A), a PVdF (B) and the single-walled carbon nanotube were mixed, and further, an appropriate amount of NMP was added to prepare a negative electrode mixture having the formulation shown in Table 4.

(Creation of negative electrode)

The obtained negative electrode mixture was applied to one side or both sides of a negative electrode current collector made of copper foil, and this was dried. This was cut off to a predetermined electrode size and rolled by using a roll press to create a negative electrode having a negative electrode material layer formed on one side or each of both sides of the negative electrode current collector. By using the obtained negative electrode, various physical properties were evaluated by the methods described above. Results are shown in Table 4.

[Table 4]

Table 4

| | | Example 25 | Example 26 | Example 27 | Example 28 | Comparative Example 9 |
|---|---|---|---|---|---|---|
| Formulation of negative electrode mixture | | | | | | |
| Fluorine-containing copolymer (A) | | A-3 | A-3 | A-5 | A-6 | A-9 |
| PVdF(B) | | B-2 | B-3 | B-2 | B-2 | B-2 |
| Mass ratio (fluorine-containing copolymer (A)/PVdF (B)) | | 20/80 | 20/80 | 50/50 | 20180 | 20180 |
| Graphite powder/silicon powder mass ratio | | 80/20 | 50/50 | 90/10 | - | 50/50 |
| Graphite powder/tin powder mass ratio | | | | | 80/20 | - |
| SWCNT content | wt% | 0.05 | 0.05 | 0.05 | 0.05 | 0.05 |
| Content of conductive aid | wt% | 4.95 | 4.95 | 4.95 | 4.95 | 4.95 |
| Total content of binder | wt% | 5 | 5 | 5 | 5 | 5 |
| Negative electrode mixture evaluation | | | | | | |
| settling stability | % | 90 | 82 | 89 | 88 | 75 |
| Negative electrode evaluation | | | | | | |
| Maximum test force | N | 0.19 | 0.19 | 0.15 | 0.17 | 0.24 |
| Battery characteristics | | | | | | |
| Cycle capacity retention rate (45°C, 300 cycles) | % | 173 | 127 | 182 | 139 | 100 |

## Claims

1. A composition for an electrochemical device, comprising a single-walled carbon nanotube, a binder, and a solvent,

wherein the binder comprises a fluorine-containing copolymer comprising a repeating unit (a) based on vinylidene fluoride, and at least one repeating unit (b) selected from the group consisting of a repeating unit (b1) represented by a general formula (b1) and a repeating unit (b2) represented by a general formula (b2):

General formula (b1):

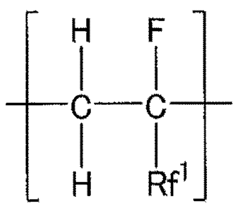

wherein $Rf^1$ is a linear or branched fluorinated alkyl group or fluorinated alkoxy group having 1 to 12 carbon atoms, and when the number of carbon atoms is 2 or more, $Rf^1$ optionally comprises oxygen atom between carbon atoms,

General formula (b2):

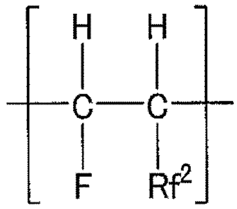

wherein $Rf^2$ is a linear or branched fluorinated alkyl group or fluorinated alkoxy group having 1 to 12 carbon atoms, and when the number of carbon atoms is 2 or more, $Rf^2$ optionally comprises oxygen atom between carbon atoms.

**2.** The composition for an electrochemical device according to claim 1, wherein an average outer diameter of the single-walled carbon nanotube is 2.5 nm or less.

**3.** The composition for an electrochemical device according to claim 1 or 2, wherein an average G/D ratio of the single-walled carbon nanotube is 2 or more.

**4.** The composition for an electrochemical device according to claim 1, wherein in the fluorine-containing copolymer, a molar ratio of the repeating unit (a) to the repeating unit (b), (a)/(b), is 99/1 to 20/80.

**5.** The composition for an electrochemical device according to any one of claims 1 to 4, wherein a glass transition temperature of the fluorine-containing copolymer is 25°C or less.

**6.** The composition for an electrochemical device according to any one of claims 1 to 5, wherein the binder further comprises a polyvinylidene fluoride.

**7.** The composition for an electrochemical device according to claim 6, wherein a mass ratio of the fluorine-containing copolymer to the polyvinylidene fluoride, fluorine-containing copolymer/polyvinylidene fluoride, is 99/1 to 1/99.

**8.** The composition for an electrochemical device according to any one of claims 1 to 7, wherein the solvent is water or at least one selected from the group consisting of N,N-dimethylformamide, N,N-dimethylacetamide, N-methyl-2-pyrrolidone, and a solvent represented by a general formula (1):

General formula (1):

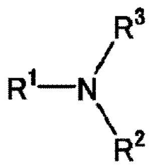

wherein $R^1$, $R^2$, and $R^3$ are each independently H or a monovalent substituent, provided that the total number of carbon atoms of $R^1$, $R^2$, and $R^3$ is 6 or more, and at least one of $R^1$, $R^2$, and $R^3$ is an organic group having carbonyl group; and any two of $R^1$, $R^2$, and $R^3$ optionally bond to each other to form a ring.

**9.** The composition for an electrochemical device according to any one of claims 1 to 8, wherein the composition for an electrochemical device is used to form an electrode of an electrochemical device.

**10.** The composition for an electrochemical device according to any one of claims 1 to 9, further comprising a powder electrode material, excluding the single-walled carbon nanotube.

**11.** The composition for an electrochemical device according to claim 10, wherein the powder electrode material comprises a lithium composite oxide as a positive electrode active material.

**12.** The composition for an electrochemical device according to claim 11, wherein a content of the single-walled carbon

nanotube is 0.001 to 10 parts by mass per 100 parts by mass of the positive electrode active material.

**13.** The composition for an electrochemical device according to claim 11 or 12, wherein a content of the binder is 0.01 to 5.0 parts by mass per 100 parts by mass of the positive electrode active material.

**14.** The composition for an electrochemical device according to claim 10, wherein the powder electrode material comprises a negative electrode active material that exhibits a potential of 2.5 V or less vs. Li when alloyed with Li or bonded with Li.

**15.** The composition for an electrochemical device according to claim 14, wherein a content of the single-walled carbon nanotube is 0.001 to 10 parts by mass per 100 parts by mass of the negative electrode active material.

**16.** The composition for an electrochemical device according to claim 14 or 15, wherein a content of the binder is 0.01 to 20.0 parts by mass per 100 parts by mass of the negative electrode active material.

**17.** An electrode comprising a current collector and an electrode material layer provided on one side or each of both sides of the current collector and formed from the composition for an electrochemical device according to any one of claims 1 to 16.

**18.** A secondary battery comprising the electrode according to claim 17.

**INTERNATIONAL SEARCH REPORT**

International application No.
**PCT/JP2023/000214**

**A. CLASSIFICATION OF SUBJECT MATTER**

***H01M 4/62***(2006.01)i; ***H01G 11/06***(2013.01)i; ***H01G 11/36***(2013.01)i; ***H01G 11/38***(2013.01)i; ***H01M 4/13***(2010.01)i; ***H01M 4/139***(2010.01)i
FI: H01M4/62 Z; H01G11/06; H01G11/36; H01G11/38; H01M4/13; H01M4/139

According to International Patent Classification (IPC) or to both national classification and IPC

**B. FIELDS SEARCHED**

Minimum documentation searched (classification system followed by classification symbols)

H01M4/62; H01G11/06; H01G11/36; H01G11/38; H01M4/13; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-57606 A (DAIKIN IND., LTD.) 09 April 2020 (2020-04-09)<br>claims, paragraph [0100], example 36 | 1, 4-13, 17-18 |
| Y | | 2-3 |
| A | | 14-16 |
| Y | JP 2016-54113 A (NIPPON ZEON CO., LTD.) 14 April 2016 (2016-04-14)<br>paragraphs [0037]-[0041] | 2-3 |
| Y | WO 2017/199884 A1 (MEIJO NANO CARBON CO., LTD.) 23 November 2017 (2017-11-23)<br>paragraphs [0023]-[0028] | 2-3 |
| A | WO 2020/080523 A1 (DAIKIN IND., LTD.) 23 April 2020 (2020-04-23) | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 March 2023** | **20 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/000214**

| Patent document cited in search report | Publication date (day/month/year) | Patent family member(s) | Publication date (day/month/year) |
|---|---|---|---|
| JP 2020-57606 A | 09 April 2020 | US 2021/0376319 A1<br>claims, paragraph [0120], example 36<br>WO 2020/071336 A1<br>claims, paragraph [0100], example 36<br>EP 3863081 A1<br>claims, paragraph [0118], example 36<br>CN 112703619 A<br>KR 10-2021-0041097 A | |
| JP 2016-54113 A | 14 April 2016 | (Family: none) | |
| WO 2017/199884 A1 | 23 November 2017 | US 2019/0172604 A1<br>paragraphs [0028]-[0033]<br>CN 109196687 A | |
| WO 2020/080523 A1 | 23 April 2020 | US 2021/0380739 A1<br>EP 3868799 A1<br>CN 112839969 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011002097 A
- JP 2013216915 A